# EUROPEAN PATENT APPLICATION

(11) **EP 4 529 139 A1**
(43) Date of publication of application: **26.03.2025**
(21) Application number: 23811016.7
(22) Date of filing: 22.05.2023
(51) Int. Cl.: H04M 1/02, H04B 1/00

(54) **ELECTRONIC DEVICE**

(30) Priority: 24.05.2022 CN 202210571835
(71) Applicant: Huawei Technologies Co., Ltd., Shenzhen, Guangdong 518129 (CN)
(72) Inventor: JIANG, Wenjie, Shenzhen, Guangdong 518129 (CN); YOU, Yulin, Shenzhen, Guangdong 518129 (CN); XU, Jia, Shenzhen, Guangdong 518129 (CN); DAI, Qifeng, Shenzhen, Guangdong 518129 (CN); CUI, Xianchao, Shenzhen, Guangdong 518129 (CN); YU, Dong, Shenzhen, Guangdong 518129 (CN); WANG, Haiyang, Shenzhen, Guangdong 518129 (CN); LUO, Yufeng, Shenzhen, Guangdong 518129 (CN); YIN, Jie, Shenzhen, Guangdong 518129 (CN); YANG, Jiangtao, Shenzhen, Guangdong 518129 (CN); ZHANG, Rui, Shenzhen, Guangdong 518129 (CN)
(74) Representative: Pfenning, Meinig & Partner mbB
(86) International application number: PCT/CN2023/095618
(87) International publication number: WO 2023/226945

(57) **Abstract**

This application provides an electronic device. A system on chip and a radio frequency integrated circuit are respectively built on different circuit boards, and a distance between any short-range antenna and the system on chip is set to be greater than a distance between any mobile cellular antenna and the radio frequency integrated circuit. In this way, circuit components can be properly distributed on a circuit board, a proportion of an area occupied by the circuit components on the circuit board is reduced, and a proportion of an area of a battery on the circuit board is increased. In addition, the system on chip communicates with the radio frequency integrated circuit through a connector, so that a power loss of cross-axis communication between circuit boards can be further reduced, and a link loss that can be borne by the system on chip can be met.

## Description

### CROSS-REFERENCE TO RELATED APPLICATIONS

This application claims priority to Chinese Patent Application No. 202210571835.7, filed with the China National Intellectual Property Administration on May 24, 2022 and entitled "ELECTRONIC DEVICE", which is incorporated herein by reference in its entirety.

### TECHNICAL FIELD

This application relates to the field of terminal technologies, and in particular, to an electronic device.

### BACKGROUND

In the conventional technology, to reduce a communication loss between a system on chip (System on Chip, SOC) and a radio frequency integrated circuit (Radio Frequency Integrated Circuit, RFIC) and meet a link loss that can be borne by the system on chip, the system on chip and the radio frequency integrated circuit are usually installed on a same circuit board in an electronic device.

In addition, a short-range antenna and a part of mobile cellular antennas are also installed on the circuit board, to reduce a communication loss between the short-range antenna and the system on chip and a communication loss between the mobile cellular antenna and the radio frequency integrated circuit; and the other part of mobile cellular antennas are installed on another circuit board in the electronic device. However, if the system on chip, the radio frequency integrated circuit, the short-range antenna, and the part of mobile cellular antennas are all integrated on a same circuit board in the electronic device, internal wires of the circuit board are complex, and components occupy a large area of a main board, affecting area distribution of a battery on the circuit board.

### SUMMARY

In view of this, this application provides an electronic device, to properly distribute an area occupied by a component on a circuit board, thereby increasing a proportion of an area of a battery on the circuit board.

According to a first aspect, this application provides an electronic device. The electronic device includes: a first circuit board, a second circuit board, and a connector connecting the first circuit board and the second circuit board, where the first circuit board is built with a system on chip, the second circuit board is built with a radio frequency integrated circuit, a distance between any mobile cellular antenna in the electronic device and the radio frequency integrated circuit is less than a distance between any short-range antenna in the electronic device and the system on chip, and the system on chip on the first circuit board communicates with the radio frequency integrated circuit on the second circuit board through the connector; the system on chip is configured to separately receive data from and send data to at least one short-range antenna and the radio frequency integrated circuit; the at least one short-range antenna is further configured to receive and transmit data based on a short-range communication technology; the radio frequency integrated circuit is further configured to: perform radio frequency processing on data sent by the system on chip, and then generate a radio frequency signal; receive a radio frequency signal from and send a radio frequency signal to at least one mobile cellular antenna; and perform radio frequency processing on a radio frequency signal sent by the at least one mobile cellular antenna to obtain corresponding data; and the at least one mobile cellular antenna is further configured to receive and transmit a radio frequency signal based on a mobile cellular communication technology.

**In** comparison with the conventional technology, in this application, the system on chip and the radio frequency integrated circuit are respectively built on different circuit boards, and a distance between any short-range antenna and the system on chip is set to be greater than a distance between any mobile cellular antenna and the radio frequency integrated circuit. In this way, circuit components can be properly distributed on a circuit board, a proportion of an area occupied by the circuit components on the circuit board is reduced, and a proportion of an area of a battery on the circuit board is increased. In addition, in this application, the system on chip and the radio frequency integrated circuit are respectively built on different circuit boards, so that heat sources are separated, thereby helping the heat sources of the entire electronic device bring better use experience to a user.

In an optional design, the connector includes a flexible connector, and the system on chip on the first circuit board communicates with the radio frequency integrated circuit on the second circuit board through the flexible connector.

In this application, the connector is disposed as the flexible connector, so that the system on chip on the first circuit board communicates with the radio frequency integrated circuit on the second circuit board through the flexible connector, a power loss of cross-axis communication between circuit boards can be reduced, and a link loss that can be borne by the system on chip can be met.

In a possible design, the second circuit board is further built with a signal processor, the signal processor is connected to the radio frequency integrated circuit, the signal processor is connected to the system on chip on the first circuit board through the flexible connector, and the signal processor is configured to: receive first data from the system on chip, adjust or correct a first frequency loss of the first data in a transmission process, and send the first data to the radio frequency integrated circuit; and/or receive second data from the radio frequency integrated circuit, adjust or correct a second frequency loss of the second data in a transmission process, and send the second data to the system on chip. Optionally, the signal processor is any processor in a repeater, a phase-locked loop circuit, and a signal adjuster.

In this application, the signal processor is added between the system on chip on the first circuit board and the radio frequency integrated circuit on the second circuit board, and a signal between links is further enhanced through the signal processor, so that the power loss of cross-axis communication between circuit boards can be reduced.

In a possible design, the connector includes a flexible connector and a coaxial cable, the coaxial cable includes a plurality of coaxial lines, and the system on chip on the first circuit board communicates with the radio frequency integrated circuit on the second circuit board through the coaxial cable.

In this application, the connector is disposed as the flexible connector and the coaxial cable, so that the system on chip communicates with the radio frequency integrated circuit through the coaxial cable, the power loss of cross-axis communication between circuit boards can be reduced, and the link loss that can be borne by the system on chip can be met.

In a possible design, the plurality of coaxial lines in the coaxial cable are in contact with each other to form a cylindrical shape, and a periphery of the plurality of coaxial lines is sequentially wrapped with a plastic packaging layer and a protective layer from inside to outside; or the coaxial cable includes the plurality of coaxial lines that are placed side by side, and a periphery of the plurality of coaxial lines is wrapped with the protective layer. Optionally, the coaxial line used in this application is an ultra-thin coaxial line.

In this application, the plurality of coaxial lines are integrated into a cylindrical shape, or the plurality of coaxial lines are placed side by side and fixed as coaxial cables, so that small rotating shaft space can be occupied, thereby implementing simple axis crossing.

In a possible design, the first circuit board is further built with a power management unit, and the battery management unit on the first circuit board is connected to the system on chip on the first circuit board; and when the connector includes the flexible connector, the battery management unit on the first circuit board may communicate with the radio frequency integrated circuit on the second circuit board through the flexible connector; or the connector further includes a single coaxial line, and the battery management unit on the first circuit board communicates with the radio frequency integrated circuit on the second circuit board through the single coaxial line.

Optionally, the connector includes the flexible connector. Optionally, the connector includes the flexible connector and the single coaxial line. Optionally, the connector includes the flexible connector, the coaxial cable, and the single coaxial line.

In this application, the power management unit is disposed to communicate with the radio frequency integrated circuit through the flexible connector or the single coaxial line, so that synchronization between the first circuit board and the second circuit board is implemented, and the power loss of cross-axis communication between circuit boards can be further reduced.

In a possible design, the first circuit board is further built with a radio frequency integrated circuit, the radio frequency integrated circuit is connected to the battery management unit on the first circuit board, and the radio frequency integrated circuit is connected to the system on chip on the first circuit board.

In comparison with the conventional technology, in this application, the system on chip and the radio frequency integrated circuit 1 are built on the first circuit board, and the radio frequency integrated circuit 2 is built on the second circuit board, so that an available area of an antenna is expanded, antenna combination can be reduced, and a combination loss can be further reduced. The circuit components can be properly distributed on the circuit board, the proportion of the area occupied by the circuit components on the circuit board is reduced, and the proportion of the area of the battery on the circuit board is increased. In addition, in this application, the system on chip and the radio frequency integrated circuit are respectively built on different circuit boards, so that heat sources are separated, thereby helping the heat sources of the entire electronic device bring better use experience to a user.

In a possible design, the second circuit board is further built with an application processor and a display module, and the application processor is connected to the display module; the application processor is configured to: communicate with the system on chip on the first circuit board through the flexible connector; and control an application in the electronic device, and send a first display command to the display module, where the first display command indicates the display module to display a user interface of the application; and the display module is configured to: receive the first display command from the application processor, and display the user interface of the application based on the first display command.

In this application, the application processor is added to the second circuit board; and after signal exchange is performed by the application processor added to the second circuit board and a functional component such as the display module on the second circuit board, signal exchange is performed with the system on chip on the first circuit board. That is, on the second circuit board, the application processor aggregates signals, and signal exchange between the functional component such as the display module and the system on chip on the first circuit board is reduced, thereby reducing the power loss of cross-axis communication between circuit boards.

In a possible design, the second circuit board is further built with a digital video conditional receiving module and a power management unit, and both the digital video conditional receiving module and the power management unit are connected to the application processor; the digital video conditional receiving module is configured to: receive a digital signal sent by an external signal source; determine to-be-displayed information based on the digital signal; and send the to-be-displayed information to the application processor; the application processor is further configured to: receive the to-be-displayed information from the data video conditional receiving module, and send a second display command to the display module, where the second display command indicates the display module to display the to-be-displayed information; the display module is further configured to: receive the second display command from the application processor, and display the to-be-displayed information based on the second display command; and the power management unit is configured to supply power to the application processor.

In the conventional technology, the digital video conditional receiving module and the power management unit on the second circuit board separately communicate with the system on chip on the first circuit board. In this application, both the digital video conditional receiving module and the power management unit on the second circuit board are connected to the application processor on the second circuit board, so that the digital video conditional receiving module and the power management unit communicate with the system on chip on the first circuit board through the application processor. In this way, a quantity of signals for communication between each of the digital video conditional receiving module and the power management unit and the system on chip on the first circuit board is reduced, and the power loss of cross-axis communication between circuit boards can be reduced.

In a possible design, the at least one short-range antenna includes at least one wireless fidelity module, and a maximum quantity of the at least one wireless fidelity module is 8. In this application, different quantities of wireless fidelity modules are disposed based on a requirement, so that the electronic device can communicate with the outside more efficiently.

In a possible design, different mobile cellular antennas in the at least one mobile cellular antenna support different frequency bands. Mobile cellular antennas of different frequency bands are disposed, so that the electronic device can receive information of the different frequency bands.

In a possible design, the radio frequency integrated circuit is coupled to any one of the at least one mobile cellular antenna. The radio frequency integrated circuit is built in any mobile cellular antenna, so that the occupied area on the circuit board can be further reduced, thereby increasing the proportion of the area occupied by the battery on the circuit board.

In a possible design, the at least one mobile cellular antenna is built on the second circuit board, and a proportion of an area occupied by the at least one mobile cellular antenna on the second circuit board is not greater than 50%. The proportion of the area occupied by the at least one mobile cellular antenna on the second circuit board is set, so that the proportion of the area occupied by the battery on the circuit board is ensured.

In a possible design, the at least one short-range antenna is at any frame location on the first circuit board, and the at least one mobile cellular antenna is at any frame location on the second circuit board. The short-range antenna and the mobile cellular antenna are respectively disposed at frame locations of the first circuit board and the second circuit board, so that the short-range antenna and the mobile cellular antenna better communicate with the outside, and a battery location is more conveniently arranged on the circuit board, thereby increasing the proportion of the area occupied by the battery on the circuit board.

In a possible design, the electronic device includes a first housing, and both the first circuit board and the second circuit board are built in the first housing. Alternatively, the electronic device includes a first housing and a second housing; and the first circuit board is built in the first housing, and the second circuit board is built in the second housing; or the first circuit board is built in the second housing, and the second circuit board is built in the first housing. Alternatively, when at least one third housing is further included between the first housing and the second housing, there are a plurality of flexible connectors. In this application, different types of electronic devices are obtained by disposing different quantities of housings of the electronic device. The electronic device may be a bar-type mobile phone including only one housing, or may be a dual-screen foldable phone including two housings, or may be a multi-screen foldable phone including a plurality of housings.

In a possible design, every two housings in the electronic device are hinged, or every two housings in the electronic device are slidably connected. Different types of electronic devices are obtained by disposing a connection manner between housings in the electronic device. Optionally, when the housings are hinged, the plurality of displays of the electronic device may be unfolded in a foldable manner; or when the housings are slidably connected, the plurality of displays of the electronic device may be unfolded in a sliding manner.

### BRIEF DESCRIPTION OF DRAWINGS

FIG. 1 is a diagram of a structure of an electronic device in the conventional technology;
FIG. 2 is a diagram of a structure of an electronic device according to an embodiment of this application;
FIG. 3 is a diagram of signal exchange between a first circuit board and a second circuit board in an electronic device according to an embodiment of this application;
FIG. 4 is a diagram of signal exchange between a first circuit board and a second circuit board in another electronic device according to an embodiment of this application;
FIG. 5 is a diagram of signal exchange between a first circuit board and a second circuit board in still another electronic device according to an embodiment of this application;
FIG. 6 is a diagram of signal exchange between a first circuit board and a second circuit board in yet another electronic device according to an embodiment of this application;
FIG. 7 is a diagram of signal exchange between a first circuit board and a second circuit board in still yet another electronic device according to an embodiment of this application;
FIG. 8 is a diagram of a cross section of a coaxial cable according to an embodiment of this application;
FIG. 9 is a diagram of a cross section of another coaxial cable according to an embodiment of this application;
FIG. 10 is a diagram of a structure of a coaxial cable according to an embodiment of this application;
FIG. 11 is a diagram of signal exchange between a first circuit board and a second circuit board in another electronic device according to an embodiment of this application;
FIG. 12 is a diagram of signal exchange between a first circuit board and a second circuit board in still another electronic device according to an embodiment of this application;
FIG. 13 is a diagram of a structure of another electronic device according to an embodiment of this application;
FIG. 14 is a diagram of a structure of still another electronic device according to an embodiment of this application;
FIG. 15 is a diagram of signal exchange between a first circuit board and a second circuit board in an electronic device according to an embodiment of this application;
FIG. 16 is a diagram of a structure of yet another electronic device according to an embodiment of this application;
FIG. 17 is a diagram of signal exchange between a first circuit board and a second circuit board in an electronic device according to an embodiment of this application;
FIG. 18 is a diagram of a structure of an electronic device including one housing according to an embodiment of this application;
FIG. 19 is a diagram of a structure of an electronic device including two housings according to an embodiment of this application;
FIG. 20 is a diagram of a structure of an electronic device including two housings according to an embodiment of this application;
FIG. 21 is a diagram of a structure of an electronic device including three housings according to an embodiment of this application;
FIG. 22 is a diagram of a structure of an electronic device including two housings according to an embodiment of this application;
FIG. 22a is a diagram of a structure of a connection between a first circuit board and a second circuit board when an electronic device includes two housings according to an embodiment of this application;
FIG. 23 is a diagram of a structure of an electronic device according to an embodiment of this application; and
FIG. 24 is a block diagram of a software structure of an electronic device according to an embodiment of this application.

### DESCRIPTION OF EMBODIMENTS

To make objectives, technical solutions, and advantages of embodiments of this application clearer, the following further describes embodiments of this application in detail with reference to accompanying drawings. The terms "first" and "second" below in the descriptions of embodiments of this application are merely used for a purpose of description, and shall not be understood as an indication or implication of relative importance or implicit indication of a quantity of indicated technical features. Therefore, a feature limited by "first" or "second" may explicitly or implicitly include one or more features.

It should be understood that in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects. "At least one of the following pieces (items)" or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

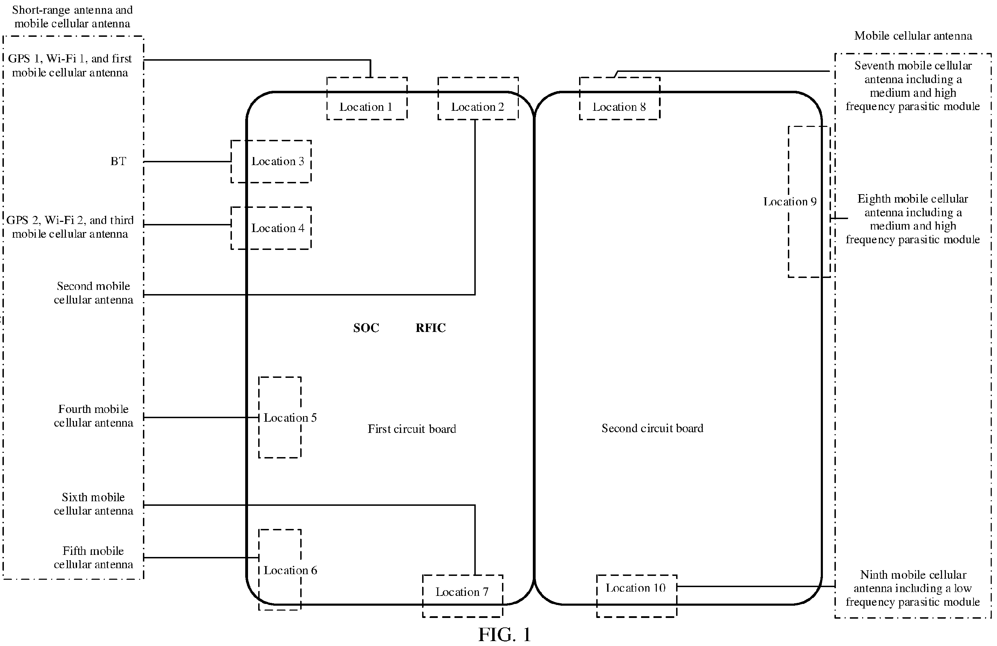

In the conventional technology, an electronic device includes an SOC and an RFIC. To reduce a communication loss between the SOC and the RFIC and meet a link loss that can be borne by the SOC, the SOC and the RFIC are usually installed on a same circuit board in the electronic device. For example, both the SOC and the RFIC shown in FIG. 1 are installed on a first circuit board. In addition, in a current component deployment solution of the electronic device, a short-range antenna and a part of mobile cellular antennas are also installed on the first circuit board, to reduce a communication loss between the short-range antenna and the SOC, and a communication loss between the mobile cellular antenna and the RFIC. In this solution, the other part of mobile cellular antennas are installed on a second circuit board in the electronic device. Herein, the short-range antenna may include antennas of various short-range communication technologies such as a global positioning system (Global Positioning System, GPS), wireless fidelity (Wireless Fidelity, Wi-Fi), and a Bluetooth module (Bluetooth module, BT). The mobile cellular antenna is an antenna that supports a mobile cellular communication technology, and may include a parasitic module. The parasitic module may be a medium and high frequency (Medium and high frequency, MHF) parasitic module, or may be a low frequency (low frequency, LF) parasitic module.

For example, on the first circuit board shown in FIG. 1, a GPS 1, Wi-Fi 1, and a first mobile cellular antenna are installed at a location 1, a second mobile cellular antenna is installed at a location 2, BT is installed at a location 3, a GPS 2, Wi-Fi 2, and a third mobile cellular antenna are installed at a location 4, a fourth mobile cellular antenna is installed at a location 5, a fifth mobile cellular antenna is installed at a location 6, and a sixth mobile cellular antenna is installed at a location 7; and on the second circuit board, a seventh mobile cellular antenna including a medium and high frequency parasitic module is installed at a location 8, an eighth mobile cellular antenna including a medium and high frequency parasitic module is installed at a location 9, and a ninth mobile cellular antenna including a low frequency parasitic module is installed at a location 10.

However, as shown in FIG. 1, the SOC, the RFIC, the short-range antenna, and the part of mobile cellular antennas are all integrated on the first circuit board in the electronic device, and the short-range antenna and the mobile cellular antenna need to be designed on the first circuit board in an intercalated manner. Therefore, internal wires of the first circuit board are complex, and components occupy a large area of a main board, affecting area distribution of a battery on the first circuit board.

Therefore, this application provides an electronic device. An SOC and an RFIC are respectively built on different circuit boards, and a distance between any short-range antenna and the system on chip is set to be greater than a distance between any mobile cellular antenna and the radio frequency integrated circuit. In this way, circuit components can be properly distributed on a circuit board, a proportion of an area occupied by the circuit components on the circuit board is reduced, and a proportion of an area of a battery on the circuit board is increased. In addition, the SOC and the RFIC are respectively built on two circuit boards, so that heat sources are separated, thereby helping the heat sources of the entire electronic device bring better use experience.

In an implementable embodiment, the electronic device includes: a first circuit board, a second circuit board, and a connector connecting the first circuit board and the second circuit board.

The first circuit board is built with the SOC, and the second circuit board is built with the RFIC. The distance between any mobile cellular antenna and the RFIC is less than the distance between any short-range antenna and the SOC, and the SOC on the first circuit board communicates with the RFIC on the second circuit board through the connector.

Optionally, when the connector includes a flexible connector, the SOC on the first circuit board communicates with the RFIC on the second circuit board through the flexible connector, so that a power loss of cross-axis communication between circuit boards can be reduced, and a link loss that can be borne by the SOC can be met. Herein, the flexible connector may be a flexible printed circuit (Flexible Printed Circuit, FPC).

Optionally, when the connector includes the flexible connector and a coaxial cable, the SOC on the first circuit board communicates with the RFIC on the second circuit board through the coaxial cable, so that a power loss of cross-axis communication between circuit boards can be reduced, and a link loss that can be borne by the SOC can be met. Herein, the coaxial cable includes a plurality of coaxial lines, and the coaxial line may be an ultra-thin coaxial line. For example, the coaxial lines may be coaxial lines numbered #42 to #48.

Optionally, at least one short-range antenna in the electronic device may be integrated on the first circuit board on which the SOC is located, or may be integrated on another circuit board in a housing in which the first circuit board is located. At least one mobile cellular antenna in the electronic device may be integrated on the second circuit board on which the RFIC is located, or may be integrated on another circuit board in a housing in which the second circuit board is located.

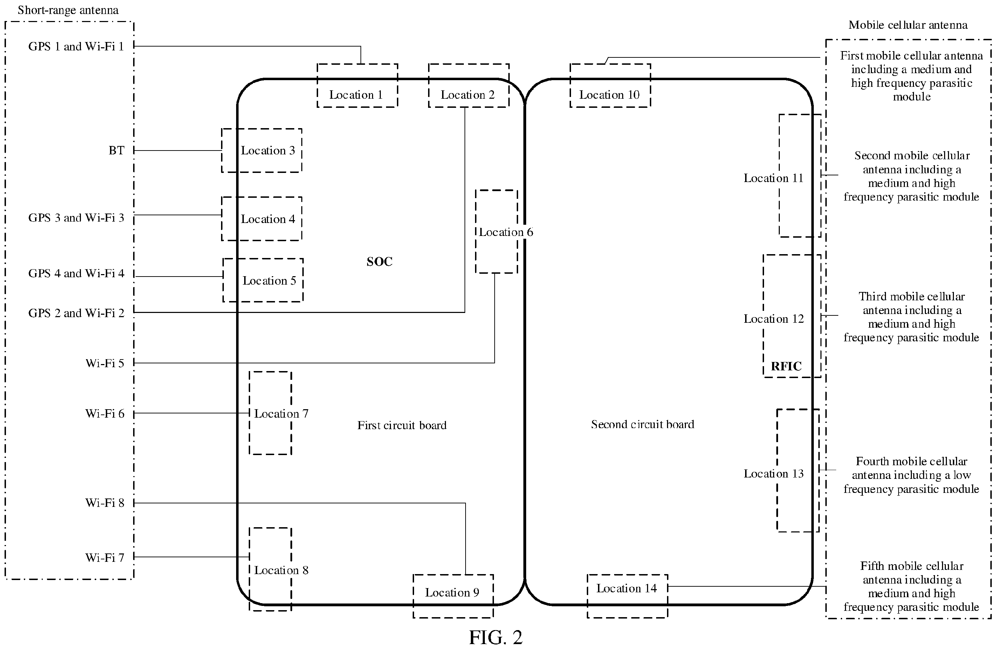

For example, as shown in FIG. 2, the first circuit board is built with at least one short-range antenna. For example, on the first circuit board, a GPS 1 and Wi-Fi 1 are installed at a location 1, a GPS 2 and Wi-Fi 2 are installed at a location 2, BT is installed at a location 3, a GPS 3 and Wi-Fi 3 are installed at a location 4, a GPS 4 and Wi-Fi 4 are installed at a location 5, Wi-Fi 5 is installed at a location 6, Wi-Fi 6 is installed at a location 7, Wi-Fi 7 is installed at a location 8, and Wi-Fi 8 is installed at a location 9.

For another example, the second circuit board in FIG. 2 is built with at least one mobile cellular antenna. For example, a first mobile cellular antenna including a medium and high frequency parasitic module is installed at a location 10 of the second circuit board, a second mobile cellular antenna including a medium and high frequency parasitic module is installed at a location 11, a third mobile cellular antenna including a medium and high frequency parasitic module is installed at a location 12, a fourth mobile cellular antenna including a low frequency parasitic module is installed at a location 13, and a fifth mobile cellular antenna including a medium and high frequency parasitic module is installed at a location 14. That is, different mobile cellular antennas in the at least one mobile cellular antenna support different frequency bands.

Optionally, the RFIC is coupled to any one of the at least one mobile cellular antenna. As shown in FIG. 2, the RFIC is coupled to the third mobile cellular antenna. In this way, a component area occupied by the RFIC on the second circuit board can be reduced, and a proportion of an area of the battery on the second circuit board is further increased.

Optionally, when the at least one mobile cellular antenna is built on the second circuit board, a proportion of an area occupied by the at least one mobile cellular antenna on the second circuit board is not greater than 50%. For example, a proportion of an area, the second circuit board, jointly occupied by the first mobile cellular antenna, the second mobile cellular antenna, the third mobile cellular antenna, the fourth mobile cellular antenna, and the fifth mobile cellular antenna on the second circuit board is not greater than 50%. In this way, the second circuit board may have a larger area for installing the battery, and the proportion of the area of the battery on the second circuit board is further increased.

In a possible design, the at least one short-range antenna includes at least one wireless fidelity module, and a maximum quantity of the at least one wireless fidelity module is 8. For example,

FIG. 2 is a diagram of a structure of the first circuit board on which eight Wi-Fi modules are installed.

In a possible design, when the at least one short-range antenna is built on the first circuit board, the at least one short-range antenna is at any frame location of the first circuit board; and when the at least one mobile cellular antenna is built on the second circuit board, the at least one mobile cellular antenna is at any frame location of the second circuit board. For example, as shown in FIG. 2, the GPS 1 and the Wi-Fi 1 are installed at the location 1 of the first circuit board, and the location 1 is at the frame location of the first circuit board. The first mobile cellular antenna is installed at the location 10 of the second circuit board, and the location 10 is at the frame location of the second circuit board.

After structural layouts of the first circuit board and the second circuit board in the electronic device are described, the following describes a process of signal exchange between the first circuit board and the second circuit board by using an example in which the first circuit board is built with the SOC and the at least one short-range antenna, and the second circuit board is built with the RFIC and the at least one mobile cellular antenna.

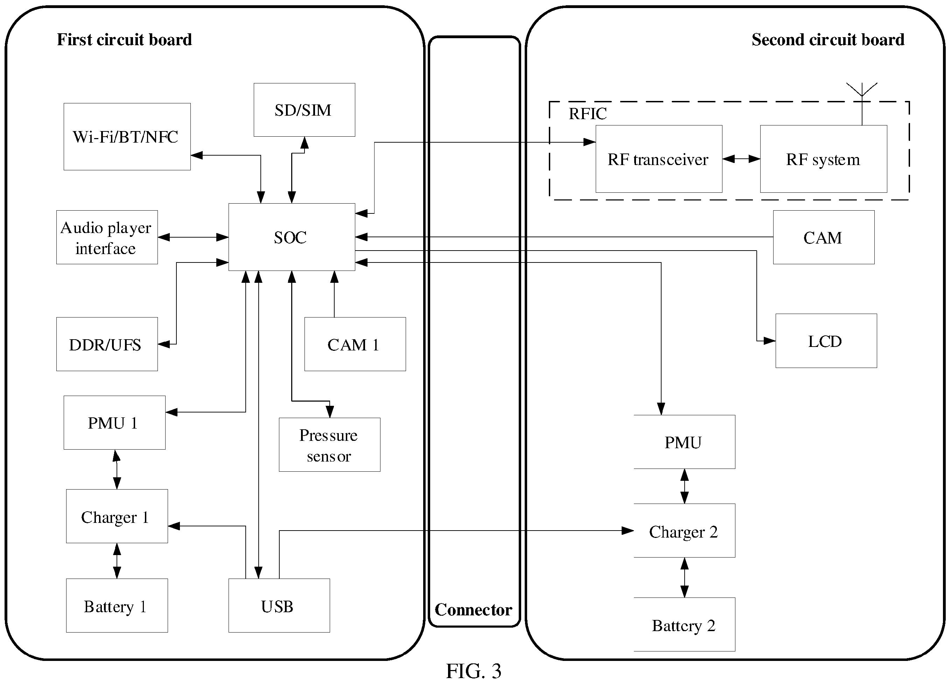

The SOC on the first circuit board may send third data to the at least one short-range antenna, and receive fourth data from the at least one short-range antenna; and may be further configured to send first data to the RFIC on the second circuit board, and receive second data from the RFIC. For example, as shown in FIG. 3, the short-range antenna on the first circuit board includes Wi-Fi, BT, and a near field communication (Near Field Communication, NFC) technology. The RFIC on the second circuit board may be formed by a radio frequency transceiver (Radio Frequency transceiver, RF transceiver) and a radio frequency system (Radio Frequency system, RF system), and the SOC on the first circuit board performs signal exchange with the RF transceiver on the second circuit board through the connector. The connector in FIG. 3 may be an FPC, or may be an FPC and a coaxial line. For example, it can be learned from the connection manner shown in FIG.

3 that, when the SOC on the first circuit board performs signal exchange with the RFIC on the second circuit board, a link loss that needs to be borne by the SOC is reduced, for example, may be reduced from -7 dB to -8 dB, -9 dB, -10 dB, or -12 dB. Therefore, signal communication based on the connection manner shown in FIG. 3 can meet the link loss that can be borne by the SOC.

After receiving the third data sent by the SOC, the at least one short-range antenna may transmit the third data by using the short-range communication technology. The at least one short-range antenna may further receive the fourth data by using the short-range communication technology, and send the fourth data to the SOC. A specific short-range communication technology is not limited herein, and may be adjusted based on an actual application scenario.

The RFIC may receive, through the FPC, the first data sent by the SOC; perform radio frequency processing on the first data, and then generate a first radio frequency signal; and send the first radio frequency signal to the at least one mobile cellular antenna. The RFIC may further receive a second radio frequency signal sent by the at least one mobile cellular antenna; perform radio frequency processing on the second radio frequency signal, and then generate the second data; and send the second data to the SOC. A specific processing manner of radio frequency processing is not limited herein, and may be adjusted based on an actual application scenario. Optionally, the first data and the second data exchanged between the RFIC and the SOC may be data of a high-speed signal. For example, the high-speed signal may be a modem high-speed signal.

The at least one mobile cellular antenna may receive the first radio frequency signal of the RFIC, and transmit the first radio frequency signal by using the mobile cellular communication technology. The at least one mobile cellular antenna may further receive the second radio frequency signal by using the mobile cellular communication technology, and send the second radio frequency signal to the RFIC. A specific processing manner of the mobile cellular communication technology is not limited herein, and may be adjusted based on an actual application scenario.

Herein, components in FIG. 3 other than the foregoing described components are described in detail subsequently, and details are not described herein again.

The system on chip and the radio frequency integrated circuit are respectively built on different circuit boards, and a distance between any short-range antenna and the system on chip is set to be greater than a distance between any mobile cellular antenna and the radio frequency integrated circuit. In this way, circuit components can be properly distributed on a circuit board, a proportion of an area occupied by the circuit components on the circuit board is reduced, and a proportion of an area of a battery on 2 on the circuit board is increased. In addition, the system on chip and the radio frequency integrated circuit are respectively built on different circuit boards, so that heat sources are separated, thereby helping improve thermal efficiency of the entire electronic device.

In an optional implementation, to reduce the power loss of cro ss-axis communication between circuit boards, on a basis of the foregoing descriptions of the first circuit board and the second circuit board in FIG. 3, a flexible connector is added to the connector, and the first circuit board communicates with the second circuit board through the flexible connector. The SOC on the first circuit board communicates with the RFIC on the second circuit board through the flexible connector, so that the power loss of cross-axis communication between circuit boards can be reduced, and a link loss that can be borne by the SOC can be met.

In addition, to enable signal synchronization between the SOC on the first circuit board and the RFIC on the second circuit board, on a basis of the foregoing descriptions of the first circuit board and the second circuit board in FIG. 3, a power management unit (Power Management Unit, PMU) may be further added to the first circuit board. An RF_CLK clock signal is sent to the RFIC on the second circuit board through the battery management unit added to the first circuit board, so that synchronization between the SOC on the first circuit board and the RFIC on the second circuit board is implemented.

The power management unit is connected to the SOC on the first circuit board. The power management unit is configured to supply power to the SOC on the first circuit board. The power management unit is connected to the RFIC on the second circuit board.

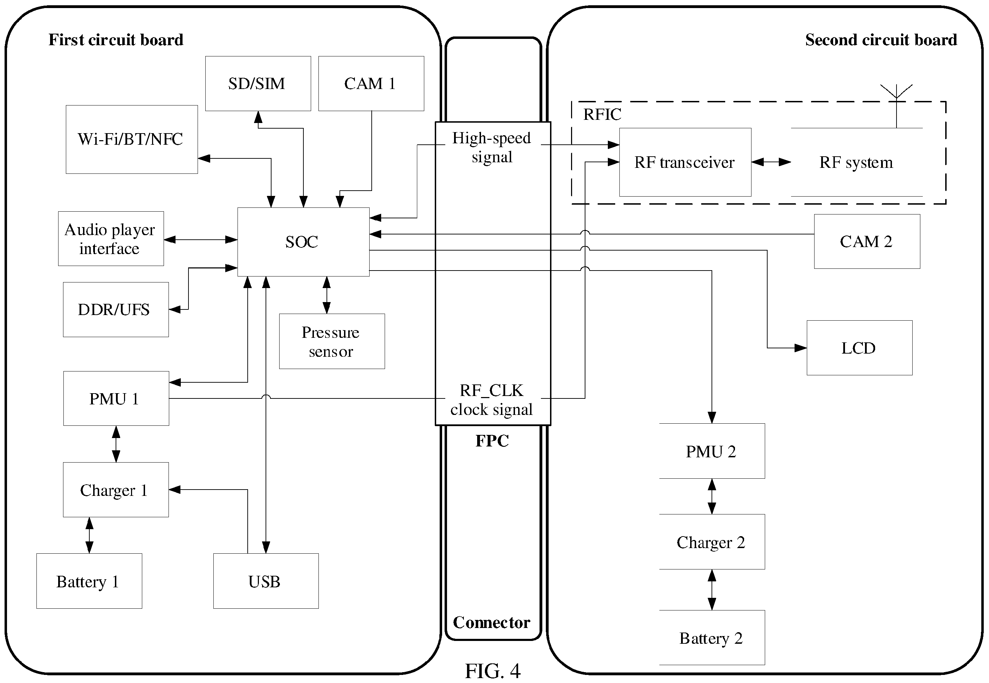

To reduce a cross-axis loss of a high-speed signal exchanged between the SOC and the RFIC, a material of an FPC connecting the first circuit board and the second circuit board may be set to an MPI material, and a width of the FPC is increased. For example, it can be learned from the connection manner shown in FIG. 4 that, when the SOC on the first circuit board performs signal exchange with the RFIC on the second circuit board, a link loss that needs to be borne by the SOC is reduced, for example, may be reduced from -7 dB to -8 dB, -9 dB, -10 dB, or -12 dB. Therefore, signal communication based on the connection manner shown in FIG. 4 can meet the link loss that can be borne by the SOC.

Similarly, components in FIG. 4 other than the foregoing described components are described in detail subsequently, and details are not described herein again.

The connector connecting the first circuit board and the second circuit board is disposed as the flexible connector, so that the power loss of cross-axis communication between circuit boards can be reduced.

In a possible implementation, to further reduce a cross-axis power loss caused by exchange between the SOC on the first circuit board and the RFIC on the second circuit board, on a basis of the foregoing descriptions of the first circuit board and the second circuit board in FIG. 4, a signal processor may be further added to the second circuit board in the electronic device. The signal processor is connected to the RFIC, and the signal processor is connected to the SOC on the first circuit board through the flexible connector.

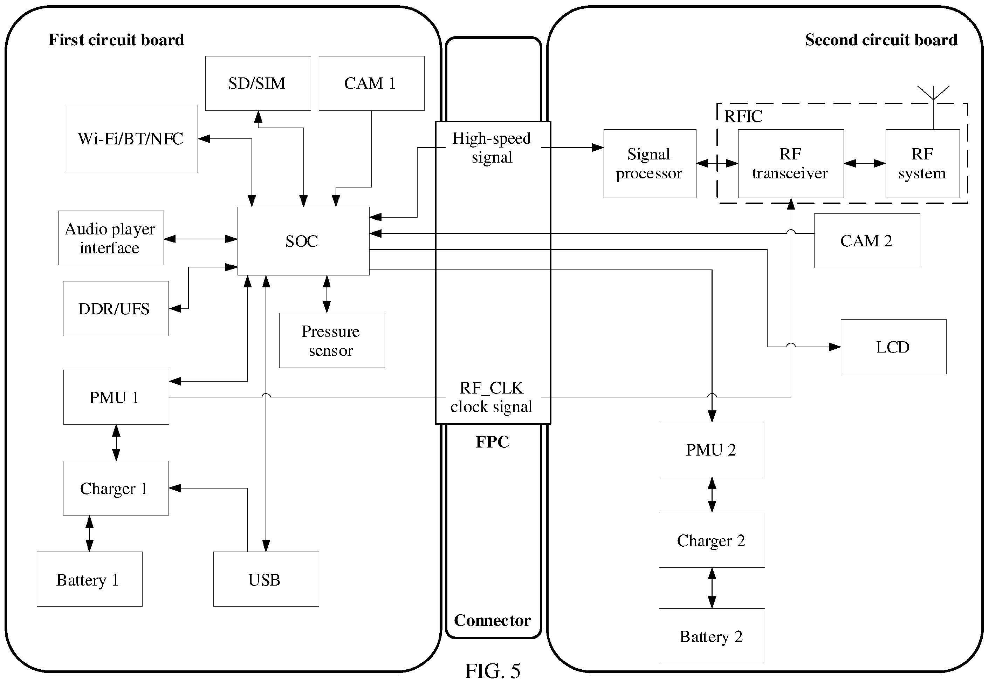

The signal processor may receive the first data sent by the SOC, adjust or correct a first frequency loss of the first data in a transmission process, and send the first data to the RFIC; and/or receive the second data sent by the RFIC, adjust or correct a second frequency loss of the second data in a transmission process, and send the second data to the SOC. In the conventional technology, a maximum link loss borne by the SOC is 7 dB. Therefore, the signal processor is added to the second circuit board and the signal processor is used to enhance a signal between links, so that the cross-axis power loss caused by exchange between the SOC on the first circuit board and the RFIC on the second circuit board can be further reduced, to meet the link loss borne by the SOC. For example, it can be learned from the connection manner shown in FIG. 5 that, when the SOC on the first circuit board performs signal exchange with the RFIC on the second circuit board, a link loss that needs to be borne by the SOC is reduced, for example, may be reduced from -7 dB to -8 dB, -9 dB, -10 dB, or -12 dB. Therefore, signal communication based on the connection manner shown in FIG. 5 can meet the link loss that can be borne by the SOC.

Optionally, the signal processor is any processor in a repeater (Repeater), a phase-locked loop (Clock and data recovery, CDR) circuit, and a signal adjuster (Redriver). FIG. 5 is a diagram of signal exchange between the first circuit board and the second circuit board when the signal processor is the redriver.

When the signal processor is the CDR circuit, the CDR circuit may recover a clock signal of the first data from the first data sent by the SOC on the first circuit board, and the recovered clock signal of the first data is used to perform data sampling on the first data. The CDR circuit may further recover a clock signal of the second data from the received second data sent by the RFIC, and the recovered clock signal of the second data is used to perform data sampling on the second data. Because the CDR circuit includes a clock recovery circuit, a frequency and a phase in the circuit can be adjusted in real time. Therefore, when the CDR circuit is included in a link, parameter auto-negotiation (auto-negotiation) is usually not supported. However, a filter may be designed at a data transmit end of the CDR circuit, to perform filtering processing on a signal, and continuous time linear equalization (Continuous Time Linear Equalization, CTLE), a VGA, and a decision feedback equalization (decision feedback equalization, DFE) circuit are designed at a data receive end of the CDR circuit, to implement adaptive adjustment of an equalization parameter at the data receive end. Herein, CTLE is used to equalize a power loss caused by a frequency in signal exchange, the VGA is used to recover a signal amplitude, and the DFE circuit is used to adaptively adjust a parameter.

In addition, the signal processor may alternatively be a retimer (Retimer). A function that can be implemented by the retimer is equivalent to a function that can be implemented by the CDR circuit in combination with a specified protocol. Specific protocol content is not limited herein.

For the signal processor serving as the repeater, because the repeater does not include the CDR circuit, when the repeater is included in the link, the data receive end of the repeater does not include the DFE circuit either, and therefore usually does not support parameter auto-negotiation.

For the signal processor serving as the redriver, the redriver may increase strength of a signal in the link. The redriver is used, so that a frequency loss of data in the transmission process can be adjusted or corrected, to ensure integrity of a data signal received at the data receive end.

Similarly, components in FIG. 5 other than the foregoing described components are described in detail subsequently, and details are not described herein again.

The signal processor is added to the second circuit board, so that the strength of the signal between the SOC on the first circuit board and the RFIC on the second circuit board is further enhanced by the signal processor, so that the power loss of cross-axis communication between circuit boards can be reduced.

In a possible implementation, in a manner in which a rate of a high-speed signal transmitted between the RFIC and the SOC is reduced, so that the cross-axis power loss caused by exchange between the SOC and the RFIC can be reduced. On a basis of the foregoing descriptions of the first circuit board and the second circuit board in FIG. 4, a single coaxial line is added to the connector. An RF LCK clock signal is transmitted through the single coaxial line, so that a transmission problem of the RF_LCK clock signal can be avoided when a signal transmission rate is reduced.

The high-speed signal may be a Serdes signal, a PCIE signal, or a Qlink signal. A chip interface mode of the SOC is changed from a 1T2R mode to a 1T3R mode or a 1T4R mode, to reduce a cross-axis rate of the high-speed signal. 1T2R means one TX interface and two RX interfaces. After the cross-axis rate of the high-speed signal is reduced, a common conventional FPC may be matched for the connector to transmit the high-speed signal, to implement communication between the first circuit board and the second circuit board.

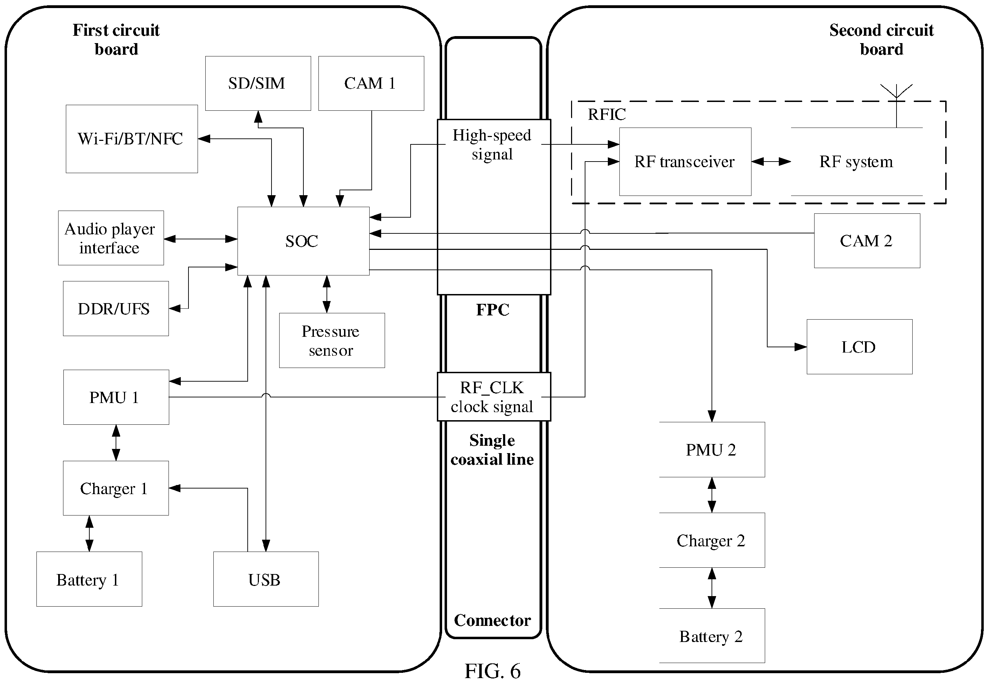

In the conventional technology, isolation of the RF_LCK clock signal needs to reach 65 dB at a current stage, but isolation provided by the common conventional FPC is about 60 dB. In this case, when the cross-axis power loss is reduced in a manner of reducing the signal rate, one coaxial line needs to be added in the connector to transmit the RF_LCK clock signal, to implement synchronization between two sides of the first circuit board and the second circuit board. For example, it can be learned from the connection manner shown in FIG. 6 that, after the rate of the high-speed signal between the RFIC on the second circuit board and the SOC on the first circuit board is reduced, when the SOC on the first circuit board performs signal exchange with the RFIC on the second circuit board, a link loss that needs to be borne by the SOC is reduced, for example, may be reduced from -7 dB to -8 dB, -9 dB, -10 dB, or -12 dB. Therefore, signal communication based on the connection manner shown in FIG. 6 can meet the link loss that can be borne by the SOC. In addition, a PMU 1 on the first circuit board transmits the RF_LCK clock signal to the RFIC on the second circuit board through a single coaxial line, to implement synchronization between the two sides of the circuit boards.

Similarly, components in FIG. 6 other than the foregoing described components are described in detail subsequently, and details are not described herein again.

The power loss of cross-axis communication between circuit boards is reduced in a manner of reducing the rate of the high-speed signal between the SOC on the first circuit board and the RFIC on the second circuit board. In addition, the single coaxial line is added to the connector to transmit the RF_LCK clock signal between the PMU on the first circuit board and the RFIC on the second circuit board, to implement synchronization between the two sides of the circuit boards while reducing the signal rate.

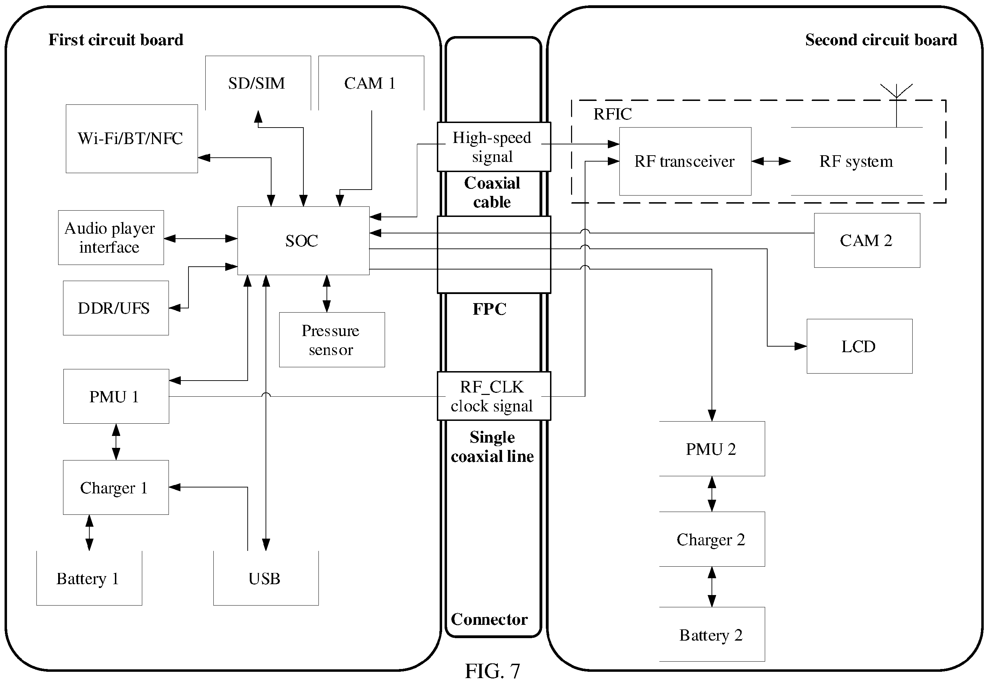

In a possible implementation, the SOC and the RFIC transmit signals through the coaxial line, so that the cross-axis power loss caused by exchange between the SOC and the RFIC can be reduced. On a basis of the foregoing descriptions of the first circuit board and the second circuit board in FIG. 7, a coaxial cable is added to the connector. The coaxial cable includes a plurality of coaxial lines. The coaxial cable is used to transmit the high-speed signal between the SOC and RFIC, to reduce a power loss of signal cross-axis transmission.

Optionally, the SOC on the first circuit board and the RFIC on the second circuit board may perform signal transmission completely by relying on the coaxial line.

Optionally, the SOC on the first circuit board and the RFIC on the second circuit board may further transmit a part of high-speed signals through the coaxial line, and transmit a remaining part of high-speed signals through the flexible connector.

In this application, a quantity of coaxial lines in the coaxial cable may be determined based on a design mode of the SOC end. The quantity of coaxial lines in the coaxial cable is greater than or equal to 3. For example, when the design mode of the SOC end is the 1T2R mode, because hardware uses a differential signal, the coaxial cable needs to include six coaxial lines to transmit the high-speed signal.

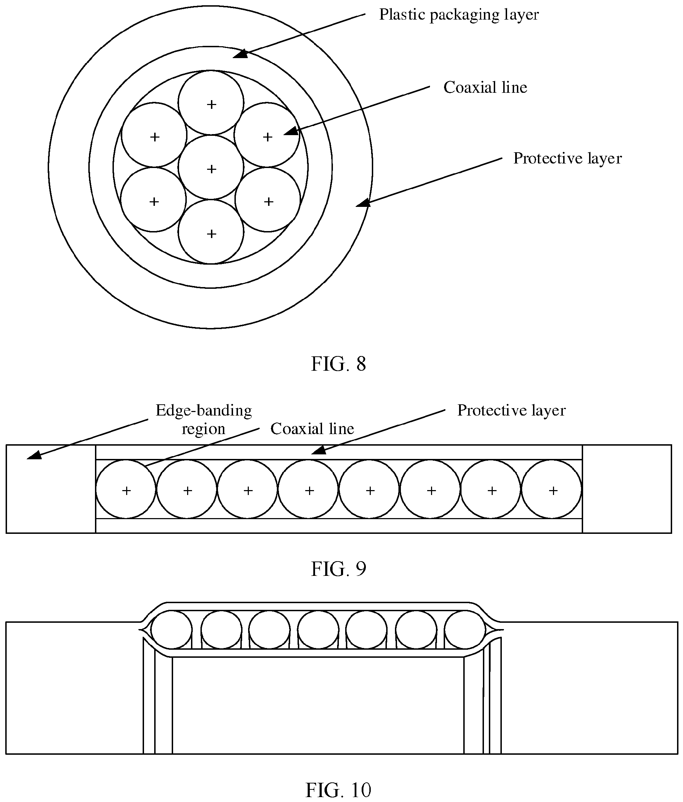

Optionally, the plurality of coaxial lines in the coaxial cable may be in contact with each other to form a cylindrical shape, and a periphery of the plurality of coaxial lines is sequentially wrapped with a plastic packaging layer and a protective layer from inside to outside. For example, FIG. 8 is a diagram of a cross section of the coaxial cable in the cylindrical shape.

Optionally, the plurality of coaxial lines in the coaxial cable may be a plurality of coaxial lines that are placed side by side, and a periphery of the plurality of coaxial lines is wrapped with a protective layer. For example, the coaxial lines that are placed side by side may be fixed through a protection measure such as mylar, and postures of the coaxial lines that are placed side by side may be fixed in a glue dispensing manner or another manner. For example, FIG. 9 is a diagram of a cross section of the coaxial cable including the plurality of coaxial lines that are placed side by side. FIG. 10 is a diagram of a structure of the coaxial cable including the plurality of coaxial lines that are placed side by side.

The connector further includes the flexible connector. The flexible connector is mainly configured to transmit a high-speed CAM signal, a high-speed display signal, and a common low-speed I/O signal. When the coaxial cable is used to transmit the high-speed signal, isolation of the flexible connector cannot meet an isolation requirement of the RF_CLK clock signal.

To implement synchronization between the two sides of the first circuit board and the second circuit board, the connector further includes a single coaxial line. The single coaxial line is used to transmit the RF_CLK clock signal between the PMU on the first circuit board and the RFIC on the second circuit board. For example, it can be learned from the connection manner shown in FIG. 7 that the SOC on the first circuit board and the RFIC on the second circuit board transmit the high-speed signal through the coaxial cable; and when the SOC on the first circuit board performs signal exchange with the RFIC on the second circuit board, a link loss that needs to be borne by the SOC is reduced. Therefore, signal communication based on the connection manner shown in FIG. 7 can meet the link loss that can be borne by the SOC. In addition, the single coaxial line is used to transmit the RF_CLK clock signal, to implement synchronization between the two sides of the circuit boards.

Similarly, components in FIG. 7 other than the foregoing described components are described in detail subsequently, and details are not described herein again.

The coaxial cable is used to transmit the signal between the SOC on the first circuit board and the RFIC on the second circuit board, so that the power loss of cross-axis communication between circuit boards can be reduced. In addition, the single coaxial line is added to the connector to transmit the RF_LCK clock signal between the PMU on the first circuit board and the RFIC on the second circuit board, to implement synchronization between the two sides of the circuit boards while reducing the signal rate.

In a possible implementation, a quantity of signals exchanged between the SOC on the first circuit board and the RFIC on the second circuit board is reduced, so that the cross-axis power loss caused by exchange between the RFIC and the SOC can be reduced. On a basis of the foregoing descriptions of the first circuit board and the second circuit board in FIG. 3 to FIG. 7, an application processor (Application processor, AP) and a display module are added to the second circuit board. Signal aggregation is performed on a signal on the second circuit board through the application processor added to the second circuit board, and signal exchange is performed on an aggregated signal on the second circuit board through the application processor and the SOC on the first circuit board.

The application processor is connected to the display module. The application processor may communicate with the SOC on the first circuit board through the flexible connector; and may further control an application in the electronic device, and send a first display command to the display module. Herein, the first display command indicates the display module to display a user interface of the application. The display module receives the first display command sent by the application processor, and displays the user interface of the application based on the first display command. For example, the display module may be a liquid crystal display (Liquid Crystal Display, LCD).

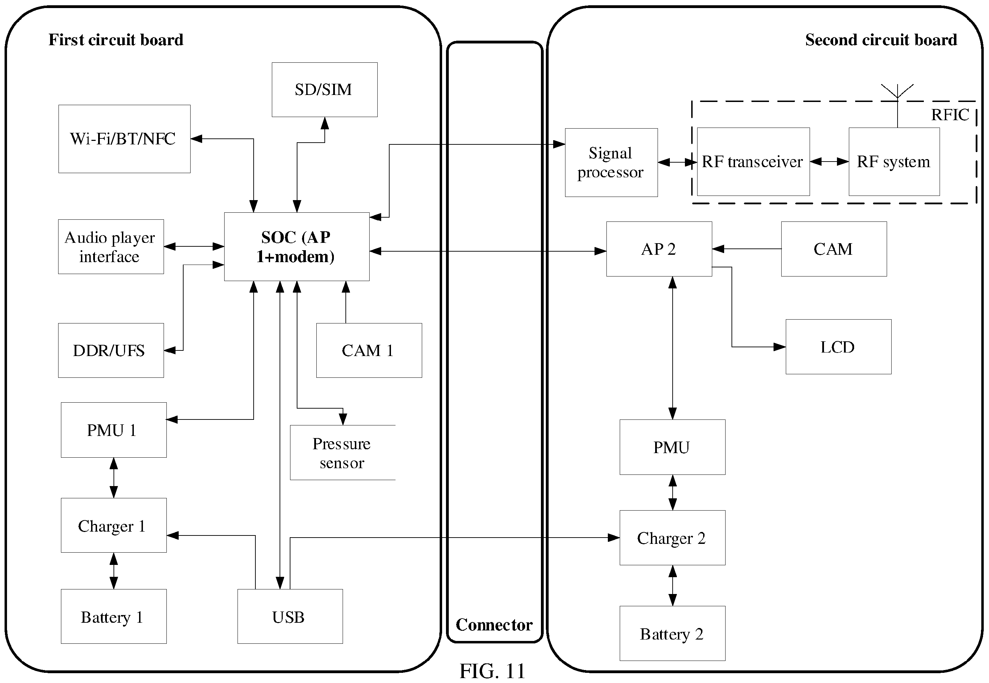

For example, as shown in FIG. 11, the SOC on the first circuit board mainly integrates two parts: a first application processor (represented by an AP 1) and a modem (Modem). The AP 1 is configured to control the application of the electronic device, and the modem is configured to determine a network standard supported by the electronic device and a communication speed of the electronic device. Assuming that the application processor added to the second circuit board is represented by an AP 2, the SOC on the first circuit board and the AP 2 on the second circuit board perform signal exchange through the FPC. For example, it can be learned from the connection manner shown in FIG. 11 that, when the SOC on the first circuit board performs signal exchange with the RFIC on the second circuit board, a link loss that needs to be borne by the SOC is reduced, for example, may be reduced from -7 dB to -8 dB, -9 dB, -10 dB, or -12 dB. Therefore, signal communication based on the connection manner shown in FIG. 11 can meet the link loss that can be borne by the SOC.

Optionally, the second circuit board is further built with a digital video conditional receiving module (Conditional Access Module, CAM) and a power management unit. Both the digital video conditional receiving module and the power management unit are connected to the application processor on the second circuit board.

The digital video conditional receiving module may receive a digital signal sent by an external signal source, determine to-be-displayed information based on the digital signal, and send the to-be-displayed information to the application processor on the second circuit board. After receiving the to-be-displayed information sent by the data video conditional receiving module, the application processor on the second circuit board sends a second display command to the display module. Herein, the second display command indicates the display module to display the to-be-displayed information. Then, after receiving the second display command sent by the application processor on the second circuit board, the display module displays the to-be-displayed information based on the second display command. In addition, the power management unit is configured to supply power to the application processor on the second circuit board.

In the second circuit board, the application processor aggregates signals of components such as the CAM, the LCD, and the PMU, and then performs signal exchange with the SOC on the first circuit board, so that a quantity of signals exchanged between the SOC on the first circuit board and the second circuit board can be reduced, thereby reducing the cross-axis power loss caused by exchange between the SOC and the second circuit board.

In addition, in FIG. 11, in addition to the components described above, the first circuit board further includes: a storage card/subscriber identity module (SD/SIM), an audio player interface (Audio), a double data rate (Double Data Rate, DDR), a universal flash storage (Universal Flash Storage, UFS), a digital video conditional receiving module (represented by a CAM 1), a charger (Charger), a battery (Battery), a universal serial bus (Universal Serial Bus, USB), and a pressure sensor (Xsensor), and the second circuit board further includes a charger and a battery. The foregoing is merely an example for describing components that can be installed on the first circuit board and the second circuit board. Specific components installed on the first circuit board and the second circuit board are not limited in this application, and may be adjusted based on an actual situation.

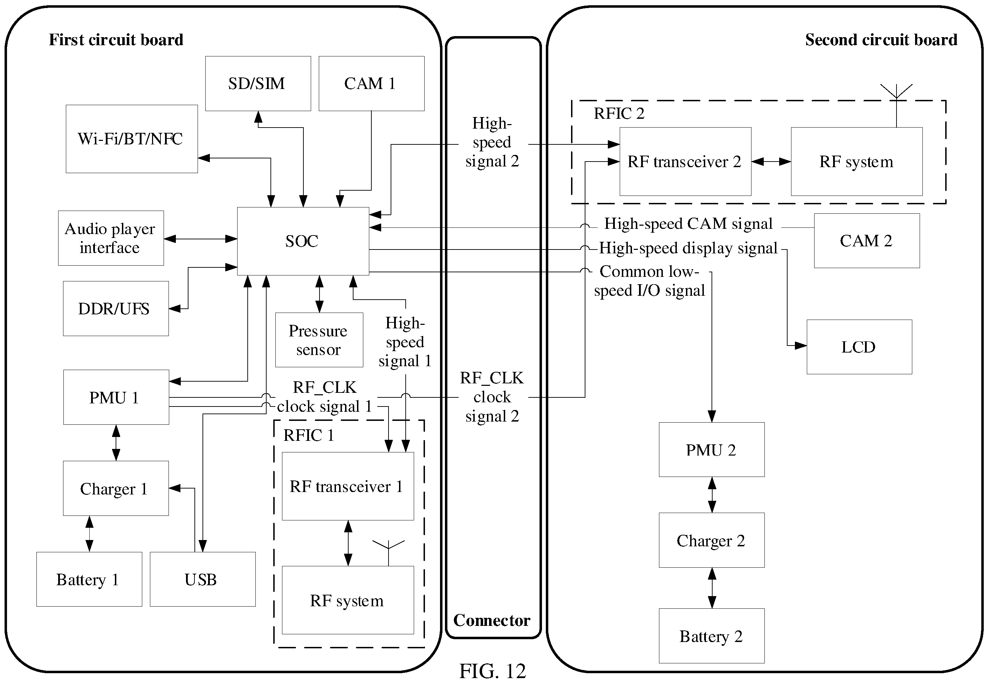

In a possible implementation, the first circuit board in the electronic device is further built with a radio frequency integrated circuit. The radio frequency integrated circuit on the first circuit board is separately connected to the battery management unit and the system on chip on the first circuit board. For example, on a basis of the descriptions of the first circuit board and the second circuit board in FIG. 3 to FIG. 7 and FIG. 11, the radio frequency integrated circuit may be further added to the first circuit board. For example, as shown in FIG. 12, the first circuit board is built with the SOC and an RFIC 1, the second circuit board is built with an RFIC 2, and the first circuit board and the second circuit board are connected through the connector.

Optionally, the first circuit board and the second circuit board may be connected through the flexible connector, or may be connected through the flexible connector and the single coaxial line, or may be connected through the flexible connector, the single coaxial line, and the coaxial cable.

Optionally, the SOC on the first circuit board may transmit a high-speed CAW signal to a CAW 2 on the second circuit board through the flexible connector. The SOC on the first circuit board may transmit a high-speed display signal to the LCD on the second circuit board through the flexible connector. The SOC on the first circuit board may transmit a common low-speed I/O signal to the PMU 2 on the second circuit board through the flexible connector.

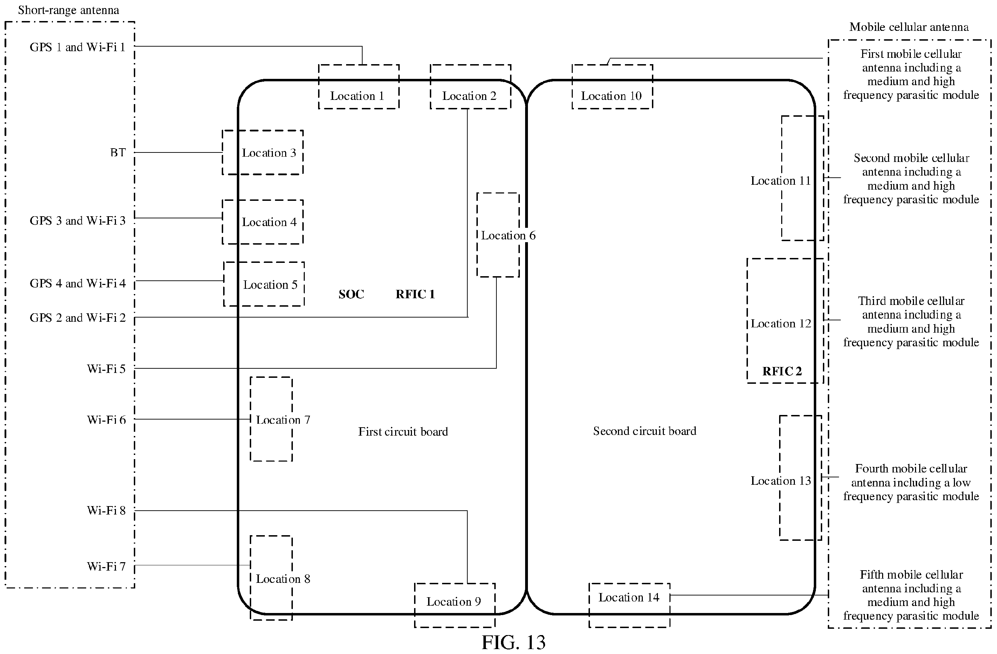

Optionally, at least one short-range antenna in the electronic device may be integrated on the first circuit board on which the SOC is located, or may be integrated on another circuit board in a housing in which the first circuit board is located. At least one mobile cellular antenna in the electronic device may also be integrated on the second circuit board on which the RFIC is located, or may be integrated on another circuit board in a housing in which the second circuit board is located. For example, as shown in FIG. 13, structural layouts of the short-range antenna and the cellular antenna on the first circuit board and the second circuit board are the same as the structural layouts of the first circuit board and the second circuit board in FIG. 2, and details are not described herein again.

Optionally, at least one short-range antenna in the electronic device may be integrated on the first circuit board on which the SOC is located, or may be integrated on another circuit board in a housing in which the first circuit board is located. At least one mobile cellular antenna in the electronic device may be integrated on the first circuit board on which the RFIC is located, or may be integrated on another circuit board in a housing in which the first circuit board is located. At least one mobile cellular antenna in the electronic device may also be integrated on the second circuit board on which the RFIC is located, or may be integrated on another circuit board in a housing in which the second circuit board is located.

Two radio frequency integrated circuits are disposed in the electronic device, the two radio frequency integrated circuits are respectively built on different circuit boards, and the system on chip is built on one of the circuit boards, so that one circuit board mainly integrates a short-range antenna and a part of cellular antennas, and the other circuit board mainly integrates cellular antennas, thereby expanding an available region of the antenna. In this way, antenna combination can be reduced, a combination loss can be reduced, and signal conduction performance can be improved. Further, combination components can be reduced, the circuit components can be properly distributed on the circuit board, the proportion of the area occupied by the circuit components on the circuit board is reduced, and the proportion of the area of the battery on the circuit board is increased. In addition, an 8*8 Wi-Fi solution may be set on the first circuit board in the electronic device. In addition, the system on chip and one of the radio frequency integrated circuits are respectively disposed on different circuit boards, so that heat sources are separated, thereby helping the heat sources of the entire electronic device bring better experience to the user.

In a possible design, an NC module of the short-range antenna in the electronic device may be integrated on the second circuit board, or may be integrated on another circuit board in a housing in which the second circuit board is located. The at least one mobile cellular antenna in the electronic device may be integrated on the first circuit board on which the SOC and the RFIC are located, or may be integrated on another circuit board in a housing in which the first circuit board is located.

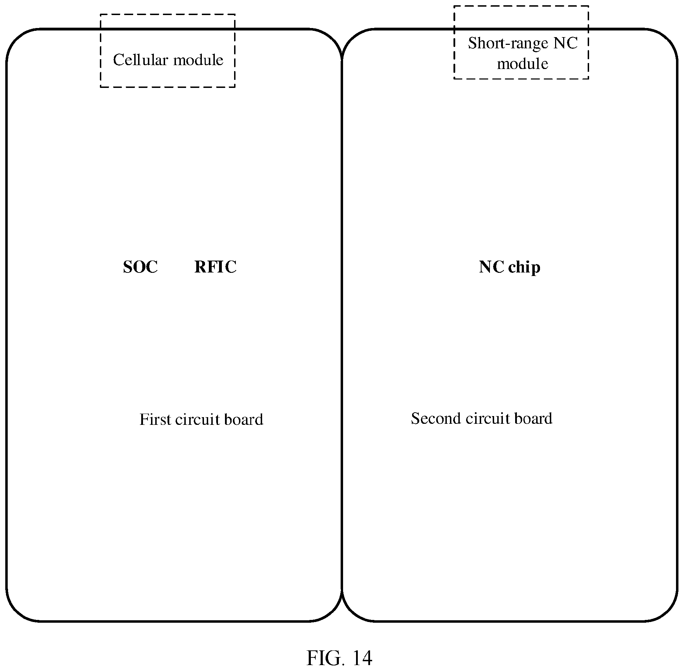

For example, as shown in FIG. 14, the first circuit board is built with a cellular module, and the second circuit board is built with a short-range NC module. For example, the cellular module includes at least one mobile cellular antenna, and the short-range NC module includes at least one short-range antenna. For example, the cellular module may be the same as the mobile cellular antenna disposed on the second circuit board in FIG. 2, and the short-range NC module may also be the same as the short-range antenna disposed on the first circuit board in FIG. 2.

Optionally, when the at least one mobile cellular antenna is built on the first circuit board, and the at least one short-range antenna is built on the second circuit board, expanded-state cellular communication and a short-range communication system are with good independence, and mutual interference is reduced, so that a throughput rate can be improved.

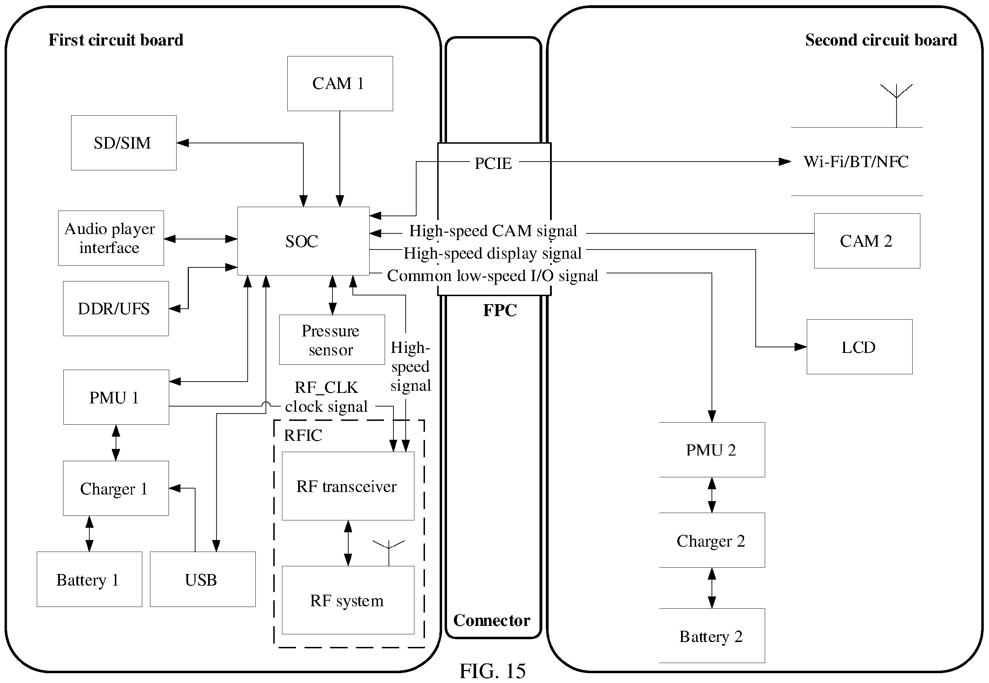

The first circuit board is built with a system on chip and a radio frequency integrated circuit, and the second circuit board is built with an NC chip. Herein, the NC chip is a chip that integrates a short-range antenna Wi-Fi, BT, and NFC. For example, as shown in FIG. 15, the first circuit board communicates with the second circuit board through the flexible connector, and a PCIC signal is transmitted between the SOC on the first circuit board and the NC chip through the flexible connector. For example, it can be learned from the connection manner shown in FIG. 15 that, a short-range module and a radio frequency integrated circuit model are respectively disposed on different circuit boards, so that an available region of the antenna can be expanded, antenna combination can be reduced, and a combination loss can be reduced. In this way, the circuit components can be properly distributed on the circuit board, the proportion of the area occupied by the circuit components on the circuit board is reduced, and the proportion of the area of the battery on the circuit board is increased.

In a possible design, the short-range NC module and the cellular module in the electronic device may be integrated on the first circuit board on which the SOC and the RFIC are located, or may be integrated on another circuit board in a housing in which the first circuit board is located. A satellite communication module in the electronic device may be integrated on the second circuit board, or may be integrated on another circuit board in a housing in which the second circuit board is located.

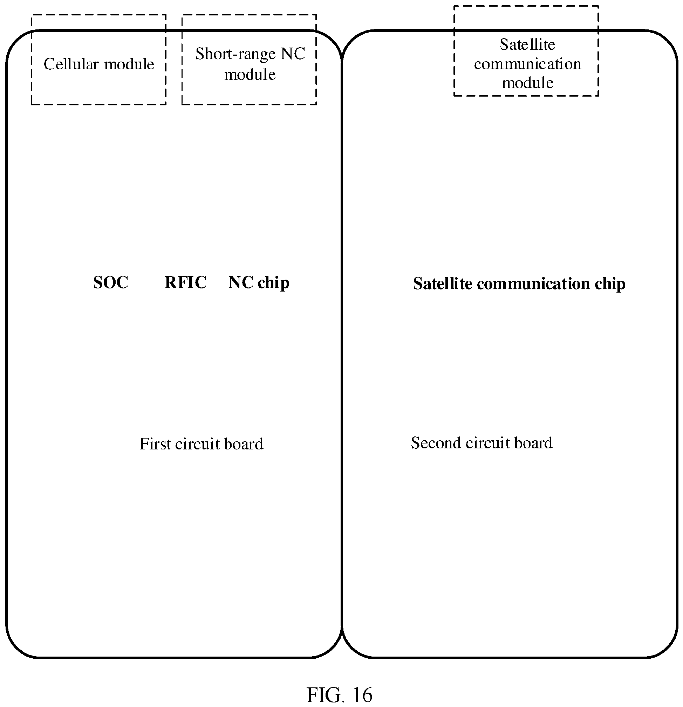

For example, as shown in FIG. 16, the first circuit board is built with a cellular module and a short-range NC module, and the second circuit board is built with a satellite communication module. For example, the cellular module includes at least one mobile cellular antenna, and the short-range NC module includes at least one short-range antenna. For example, the at least one mobile cellular antenna included in the cellular module may be the same as the mobile cellular antenna disposed on the second circuit board in FIG. 2, and the at least one short-range antenna included in the short-range NC module may also be the same as the short-range antenna disposed on the first circuit board in FIG. 2.

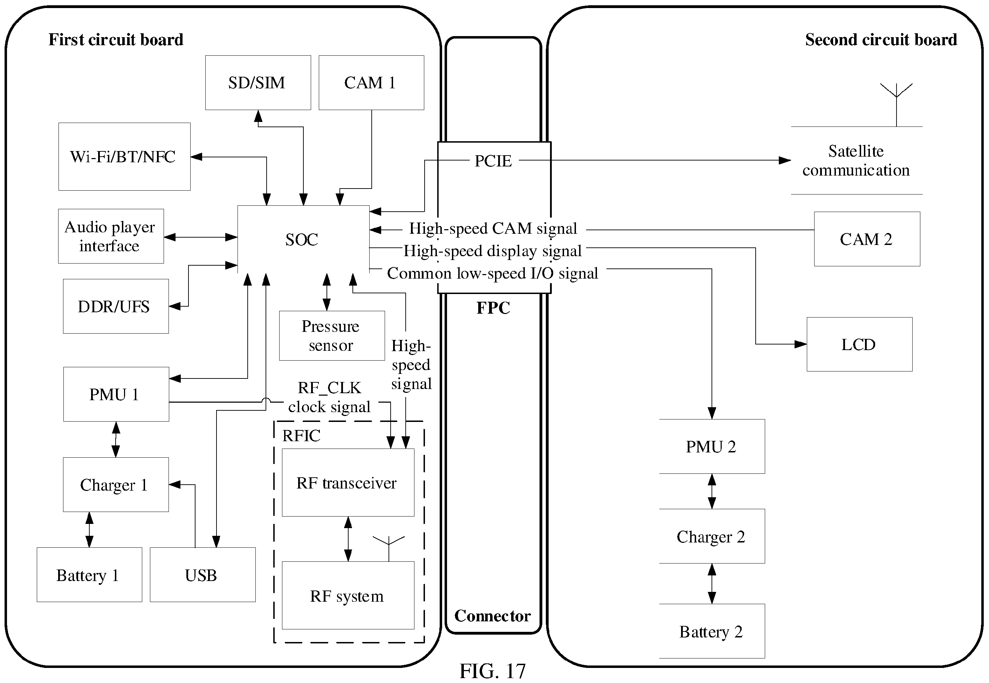

The first circuit board is built with a system on chip and a radio frequency integrated circuit, and the second circuit board is built with a satellite communication chip. Herein, the NC chip is a chip that integrates a short-range antenna Wi-Fi, BT, and NFC. For example, as shown in FIG. 17, the first circuit board communicates with the second circuit board through the flexible connector, and a PCIE signal is transmitted between the SOC on the first circuit board and the satellite communication chip on the second circuit board through the flexible connector. For example, it can be learned from the connection manner shown in FIG. 17 that, the satellite communication module is separated, and is disposed on a circuit board different from that of the cellular module and the short-range NC module, so that an available region of the antenna can be expanded, antenna combination can be reduced, and a combination loss can be reduced. In this way, the circuit components can be properly distributed on the circuit board, the proportion of the area occupied by the circuit components on the circuit board is reduced, and the proportion of the area of the battery on the circuit board is increased.

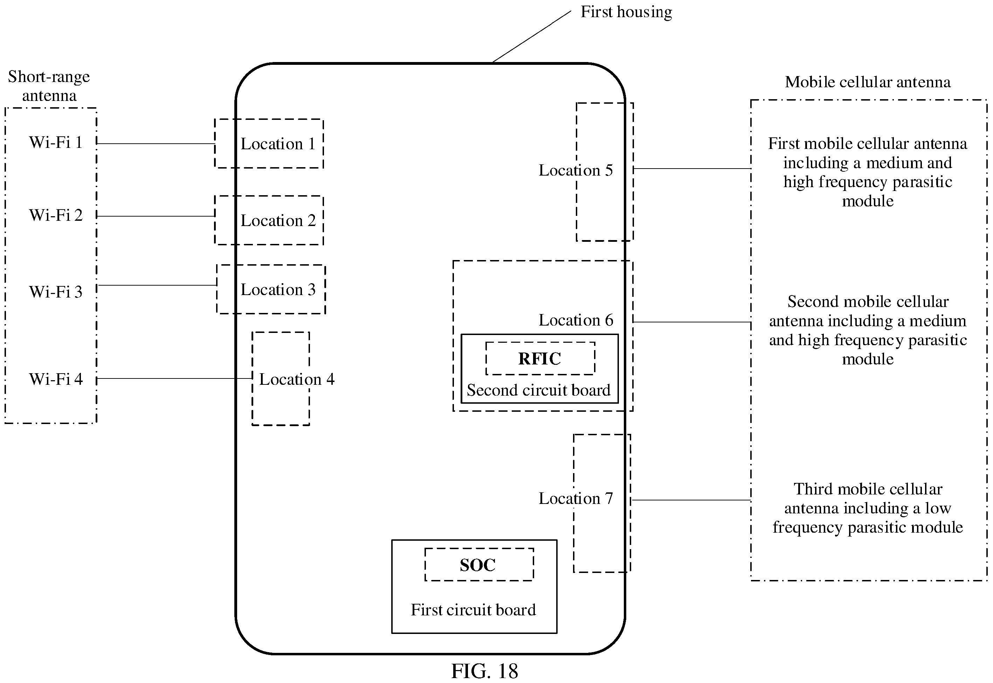

In a possible design, the electronic device includes a first housing, and both the first circuit board and the second circuit board are built in the first housing. As shown in FIG. 18, the first circuit board is built with an SOC, the second circuit board is built with an RFIC, both at least one short-range antenna and at least one mobile cellular antenna are disposed on a frame of the first housing, and a distance between any short-range antenna and the SOC is set to be greater than a distance between any mobile cellular antenna and the RFIC. The short-range antenna shown in FIG. 18 includes Wi-Fi 1 at a location 1, Wi-Fi 2 at a location 2, Wi-Fi 3 at a location 3, and Wi-Fi 4 at a location 4. The mobile cellular antenna includes a first mobile cellular antenna including a medium and high frequency parasitic module at a location 5, a second mobile cellular antenna including a medium and high frequency parasitic module at a location 6, and a third mobile cellular antenna including a low frequency parasitic module at a location 7. Here, the second circuit board is coupled to the second mobile cellular antenna.

The SOC on the first circuit board may communicate with the RFIC on the second circuit board through a flexible connector, or may communicate with the RFIC on the second circuit board through a coaxial cable, or may communicate with the RFIC on the second circuit board through a flexible connector and a coaxial line. Optionally, the second circuit board in FIG. 18 may be further built with any signal processor in a repeater, a phase-locked loop circuit, and a signal adjuster. Similarly, the second circuit board may be further built with an application processor. Functions of the components are described in detail above, and are not described herein again.

Optionally, the first circuit board may be further built with an RFIC and an SOC, the second circuit board is built with an RFIC, both at least one short-range antenna and at least one mobile cellular antenna are disposed on a frame of the first housing, and a distance between any short-range antenna and the SOC is set to be greater than a distance between any mobile cellular antenna and the RFIC.

Optionally, the first circuit board may be further built with an RFIC and an SOC, the second circuit board is built with an NC chip, both at least one short-range antenna and at least one mobile cellular antenna are disposed on a frame of the first housing, and a distance between any short-range antenna and the SOC is set to be greater than a distance between any mobile cellular antenna and the RFIC.

Optionally, the first circuit board may be further built with an NC chip, an RFIC, and an SOC, the second circuit board is built with a satellite communication chip, both at least one short-range antenna and at least one mobile cellular antenna are disposed on a frame of the first housing, and a distance between any short-range antenna and the SOC is set to be greater than a distance between any mobile cellular antenna and the RFIC.

For example, when the electronic device includes one housing, the electronic device may be a bar-type mobile phone.

Optionally, the electronic device may further include a first housing and a second housing. The first circuit board is built in the first housing, and the second circuit board is built in the second housing; or the first circuit board is built in the second housing, and the second circuit board is built in the first housing.

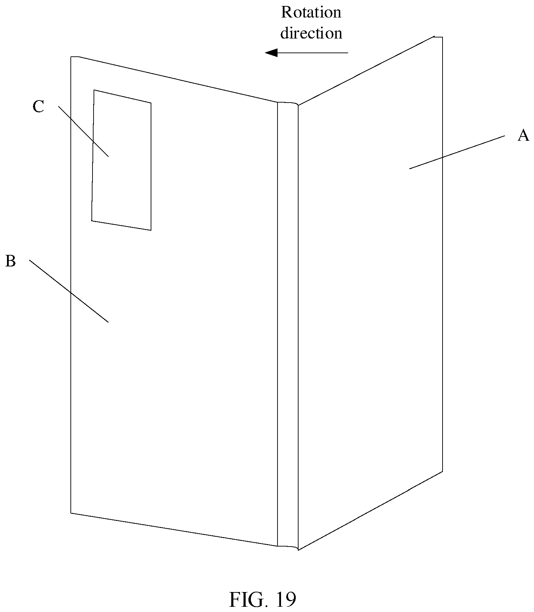

For example, FIG. 19 is a diagram of a structure of a housing A and a housing B of an electronic device. The housing A is integrated with a first circuit board, and the housing B is integrated with a second circuit board. A screen display control panel (Panel) displayed by the housing A in FIG. 19 is defined as a front side of the housing A, and a rear side of the screen display control panel displayed by the housing A in FIG. 19 is defined as a rear side of the housing A. A screen display control panel displayed by the housing B in FIG. 19 is defined as a front side of the housing B, and a rear side of the screen display control panel displayed by the housing B in FIG. 19 is defined as a rear side of the housing B. Herein, the front side of the housing A, the rear side of the housing A, and the rear side of the housing B are all screen display control panels. In addition, the front side of the housing B may be further integrated with a component such as a camera. For example, the camera may be integrated at a location C.

Assuming that the housing A and the housing B are currently in a state of being perpendicular to each other, if the housing B keeps a location unchanged, after the housing A is rotated by 90 degrees in a rotation direction shown in FIG. 19, the housing A and the housing B may completely overlap. In this case, the electronic device may display, by using the front side of the housing A, content to be displayed by the electronic device. Alternatively, if the housing B keeps a location unchanged, after the housing A is rotated by 90 degrees in a reverse direction of the rotation direction shown in FIG. 19, the housing A and the housing B may be located on a same horizontal plane. In this case, the electronic device may display, by using the rear side of the housing A and the rear side of the housing B, content to be displayed by the electronic device.

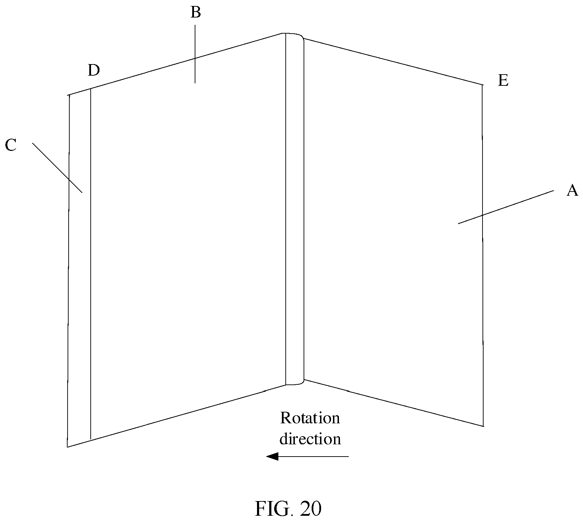

For example, FIG. 20 is a diagram of a structure of a housing A and a housing B of an electronic device. The housing A is integrated with a first circuit board, and the housing B is integrated with a second circuit board. Similarly, a screen display control panel displayed by the housing A in FIG. 20 is defined as a front side of the housing A, and a rear side of the screen display control panel displayed by the housing A in FIG. 20 is defined as a rear side of the housing A. A screen display control panel displayed by the housing B in FIG. 20 is defined as a front side of the housing B, and a rear side of the screen display control panel displayed by the housing B in FIG. 20 is defined as a rear side of the housing B. Herein, both the rear side of the housing A and the rear side of the housing B are screen display control panels. In addition, the front side of the housing B may be further integrated with a component such as a camera. For example, the camera may be integrated at a location C.

Assuming that the housing A and the housing B are currently in a state of being perpendicular to each other, if the housing B keeps a location unchanged, after the housing A is rotated by 90 degrees in a rotation direction shown in FIG. 20, a location E in the housing A and a location D in the housing B overlap. In this case, the electronic device may display, by using the rear side of the housing A and the rear side of the housing B, content to be displayed by the electronic device. Alternatively, if the housing B keeps a location unchanged, after the housing A is rotated by 90 degrees in a reverse direction of the rotation direction shown in FIG. 20, the housing A and the housing B may be located on a same horizontal plane. In this case, the electronic device may still display, by using the rear side of the housing A and the rear side of the housing B, content to be displayed by the electronic device.

In a possible design, when at least one third housing is further included between the first housing and the second housing of the electronic device, there are a plurality of connectors. An example in which the electronic device includes one third housing is used for description. A first circuit board and a second circuit board may be respectively integrated into any two housings of the first housing, the second housing, and the third housing.

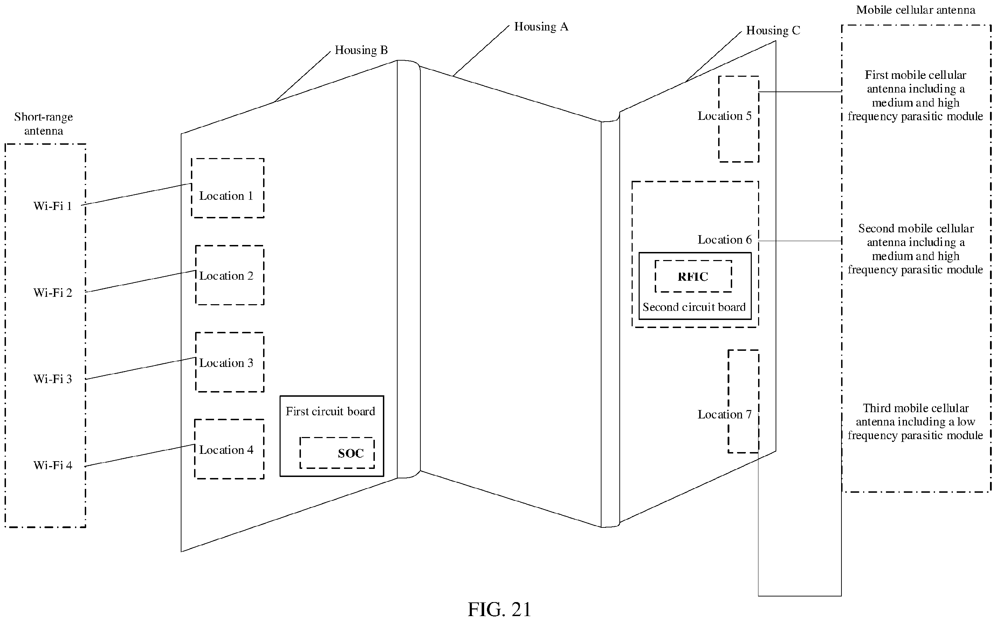

The electronic device shown in FIG. 21 includes three housings: a housing A, a housing B, and a housing C. There is one connector between the housing A and the housing B, and there is one connector between the housing A and the housing C. In this case, it is assumed that the housing B is integrated with a first circuit board, and the first circuit board is built with an SOC; and the housing C is integrated with a second circuit board, and the second circuit board is built with an RFIC. A distance between any short-range antenna and the SOC is set to be greater than a distance between any mobile cellular antenna and the RFIC. The short-range antenna shown in FIG. 21 includes Wi-Fi 1 at a location 1, Wi-Fi 2 at a location 2, Wi-Fi 3 at a location 3, and Wi-Fi 4 at a location 4. The mobile cellular antenna includes a first mobile cellular antenna including a medium and high frequency parasitic module at a location 5, a second mobile cellular antenna including a medium and high frequency parasitic module at a location 6, and a third mobile cellular antenna including a low frequency parasitic module at a location 7. Here, the second circuit board is coupled to the second mobile cellular antenna.

The SOC on the first circuit board may communicate with the RFIC on the second circuit board through a flexible connector, or may communicate with the RFIC on the second circuit board through a coaxial cable, or may communicate with the RFIC on the second circuit board through a flexible connector and a coaxial line. Optionally, the first circuit board in FIG. 21 may be further built with the RFIC.

Optionally, the second circuit board in FIG. 21 may be further built with any signal processor in a repeater, a phase-locked loop circuit, and a signal adjuster. Similarly, the second circuit board may be further built with an application processor. Functions of the components are described in detail above, and are not described herein again. Herein, a location other than the first circuit board in the housing B, a location other than the second circuit board in the housing C, and the housing A all may further include other circuit boards.

Optionally, the first circuit board in the electronic device may be further built with an SOC and an RFIC, and the second circuit board may be further built with an NC chip.

Optionally, the first circuit board in the electronic device may be further built with an SOC, an RFIC, and an NC chip, and the second circuit board may be further built with a satellite communication chip.

In addition, the electronic device may use two different types of hinges to connect the housings, for example, a dragon hinge and a butterfly hinge, to implement two foldable manners of a plurality of housings in the electronic device: inward and outward.

In the electronic device shown in FIG. 21, it is assumed that the housing B keeps a location unchanged, and the housing A and the housing C are sequentially rotated to be on a same horizontal plane as the housing B separately. In this case, the electronic device may be displayed by using display screens corresponding to the housing A, the housing B, and the housing C. Alternatively, the housing B may keep a location unchanged; and after the housing A is rotated to be on a same horizontal plane as the housing B, the housing C is displayed by rotating to keep a specific angle with horizontal planes on which the housing A and the housing B are located. Alternatively, after the housing A, the housing B, and the housing C are separately folded, the housing A, the housing B, and the housing C are displayed only by using a display of the housing B. Alternatively, the interface in the display is displayed based on an unfolded form between the housing A, the housing B, and the housing C shown in FIG. 21.

Optionally, a frame length of the middle housing A shown in FIG. 21 may be further set to twice a frame length of the housing B and a frame length of the housing C. Alternatively, a thickness of the housing A and a thickness of the housing C are set to be thinner than a thickness of the housing B, so that when the housing A, the housing B, and the housing C are in a completely folded state, a thickness of the electronic device is thin, and the electronic device is convenient for carrying.

It should be noted that, the display forms of the electronic device are different due to factors such as different quantities of housings in the electronic device, different foldable manners between housings, different quantities of folded housings, and different frame lengths of the housings. The foregoing is merely an example for description. This application includes an electronic device in any form shown by a plurality of housings.

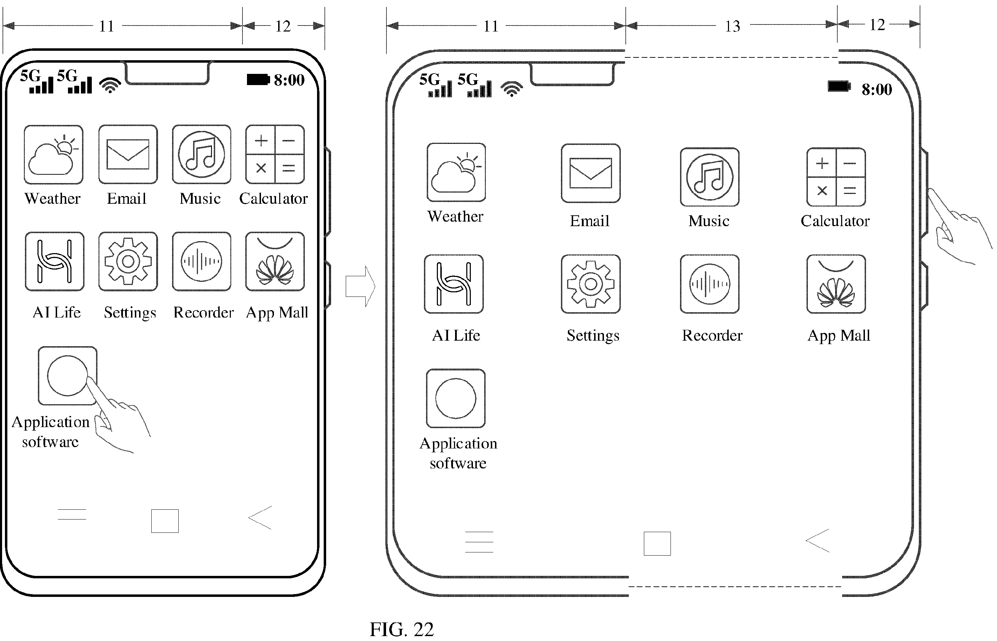

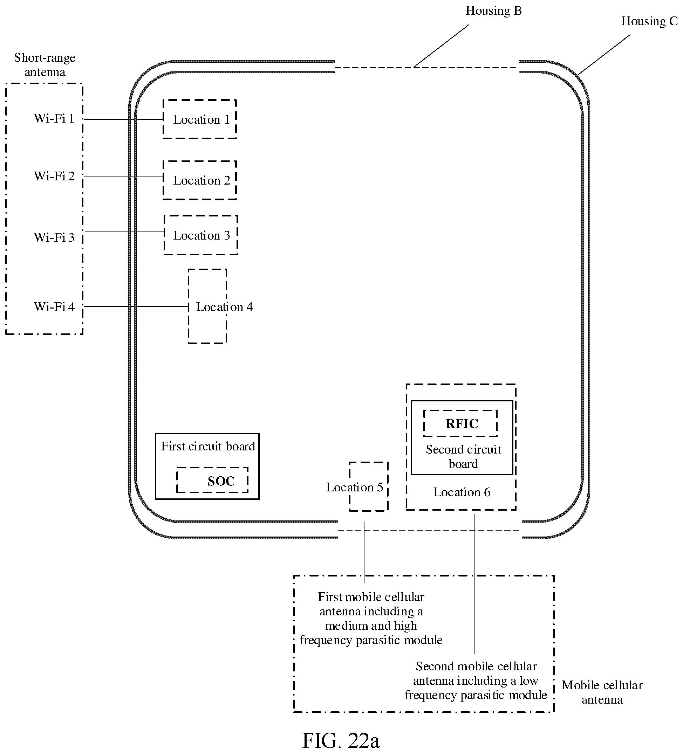

Optionally, every two housings in the electronic device are hinged, or every two housings in the electronic device are slidably connected. Assuming that the electronic device includes two housings, and the two housings are hinged, the electronic device folds the two housings in a foldable manner, for example, the foldable phone electronic device shown in FIG. 19 and FIG. 20. Assuming that the electronic device includes two housings, and the two housings are slidably connected, the electronic device slidably unfolds the two housings. For example, the electronic device shown in FIG. 22 includes a housing A and a housing B. A left figure in FIG. 22 shows a diagram of an interface displayed by the electronic device only by using a display corresponding to the housing A, and a length of an upper frame of the housing A is equivalent to a sum of lengths of a line segment 11 and a line segment 12. Application software in the display corresponding to the housing A is triggered, to slide between two housings of the electronic device, so that a display interface of the electronic device changes from a left figure in FIG. 22 to a right figure in FIG. 22. In this case, a length of a line segment 13 shown in the right figure in FIG. 22 is a part of a length of an upper frame of the housing B, and a display used by the electronic device may be a rollable display. In addition, sliding between two housings may be implemented by triggering a frame button of the electronic device. Herein, only two manners of sliding between housings are described by using examples. A specific manner of sliding between housings is not limited in this application, and may be adjusted based on an actual application situation. In addition, that the line segment 13 in FIG. 22 is displayed by using a dashed line is merely an example.

It can be learned from FIG. 22 that, it is assumed that the housing A is integrated with the first circuit board in FIG. 2, and the first circuit board is built with an SOC and at least one short-range antenna. The housing B is integrated with the second circuit board in FIG. 2, and the second circuit board is built with an RFIC and at least one mobile cellular antenna. A distance between any short-range antenna and the SOC is set to be greater than a distance between any mobile cellular antenna and the RFIC. When the electronic device is in a state shown in the left figure in FIG. 22, the housing B may be embedded in the housing A. When the electronic device is in a state shown in the right figure in FIG. 22, as shown in FIG. 22a, a location relationship between the first circuit board and the second circuit board in the housing A and the housing B is shown. The short-range antenna shown in FIG. 22a includes Wi-Fi 1 at a location 1, Wi-Fi 2 at a location 2, Wi-Fi 3 at a location 3, and Wi-Fi 4 at a location 4. The mobile cellular antenna includes a first mobile cellular antenna including a medium and high frequency parasitic module at a location 5 and a second mobile cellular antenna including a low frequency parasitic module at a location 6. Here, the second circuit board is coupled to the second mobile cellular antenna.

The SOC on the first circuit board communicates with the RFIC on the second circuit board through a flexible connector, or a coaxial cable, or a flexible connector and a coaxial cable. Optionally, the second circuit board in FIG. 22a may be further built with any signal processor in a repeater, a phase-locked loop circuit, and a signal adjuster. Similarly, the second circuit board may be further built with an application processor. Functions of the components are described in detail above, and are not described herein again. Herein, a location other than the first circuit board in the housing A and a location other than the second circuit board in the housing B may further include other circuit boards.

Optionally, the housing A in FIG. 22 may be further integrated with the first circuit board in FIG. 13, and the first circuit board is built with an SOC, an RFIC, and at least one short-range antenna; and the housing B is integrated with the second circuit board in FIG. 13, and the second circuit board is built with an RFIC and at least one mobile cellular antenna.

Optionally, the housing A in FIG. 22 may be further integrated with the first circuit board in FIG. 14, and the first circuit board is built with an SOC, an RFIC, and at least one cellular antenna; and the housing B is integrated with the second circuit board in FIG. 14, and the second circuit board is built with an NC chip and at least one short-range antenna.

Optionally, the housing A in FIG. 22 may be further integrated with the first circuit board in FIG. 16, and the first circuit board is built with an SOC, an RFIC, at least one mobile cellular antenna, and at least one short-range antenna; and the housing B is integrated with the second circuit board in FIG. 16, and the second circuit board is built with a satellite communication chip and a satellite communication module.

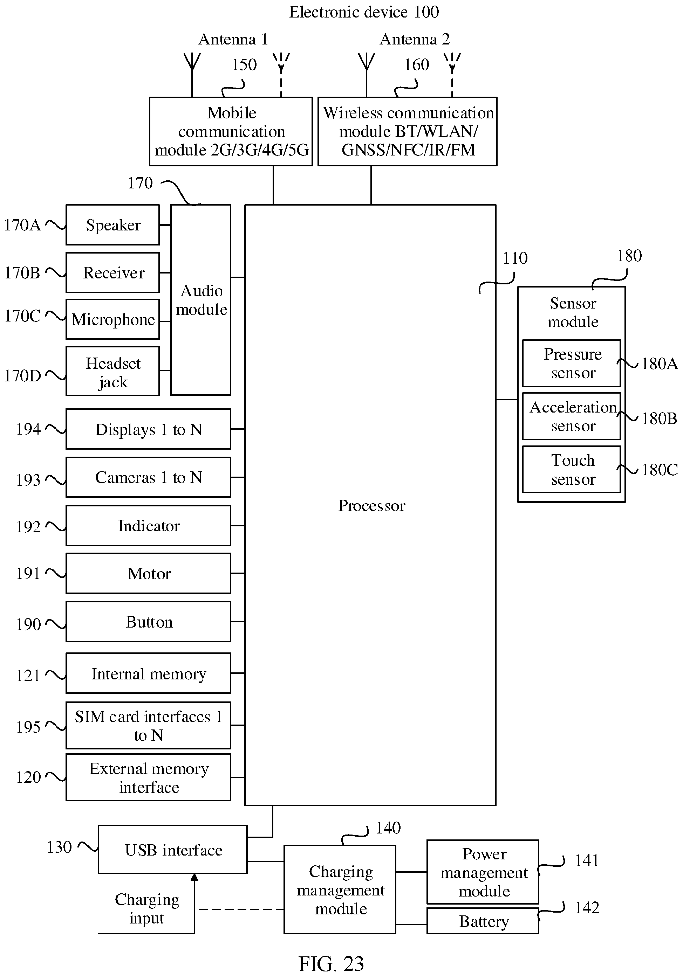

FIG. 23 is a diagram of a structure of an electronic device 100 according to an embodiment of this application. As shown in FIG. 23, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

Herein, the antenna 2 of the wireless communication module 160 may be the short-range antenna described above in this application, and the antenna 1 of the mobile communication module 150 may be the mobile cellular antenna described above in this application.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device 100. The controller may generate an operation control signal based on an instruction operation code and a time sequence signal, to complete control of instruction fetching and instruction execution. A memory may be further disposed in the processor 110, and is configured to store instructions and data. In some embodiments, the memory in the processor 110 is a cache memory. The memory may store instructions or data that have/has been recently used or cyclically used by the processor 110. If the processor 110 needs to use the instructions or the data again, the processor may directly invoke the instructions or the data from the memory. This avoids repeated access, reduces waiting time of the processor 110, and improves system efficiency.

The USB interface 130 is an interface that conforms to a USB standard specification, and may be specifically a mini USB interface, a micro USB interface, a USB type-C interface, or the like. The USB interface 130 may be configured to be connected to a charger to charge the electronic device 100, or may be configured to transmit data between the electronic device 100 and a peripheral device. The charging management module 140 is configured to receive a charging input from the charger. The power management module 141 is configured to be connected to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like. The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same component as at least some modules of the processor 110.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite systems, QZSS), and/or a satellite based augmentation system (satellite based augmentation system, SBAS).

The display 194 is configured to display a display interface of an application, for example, display a display page of an application installed on the electronic device 100. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The camera 193 is configured to capture a static image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, software code of at least one application, and the like. The data storage area may store data (for example, a photographed image or a recorded video) and the like generated in a process of using the electronic device 100. In addition, the internal memory 121 may include a high-speed random access memory, or may include a nonvolatile memory, for example, at least one magnetic disk storage device, a flash memory, or a universal flash storage (universal flash storage, UFS).

The external memory interface 120 may be configured to be connected to an external storage card, for example, a micro SD card, to extend a storage capability of the electronic device. The external storage card communicates with the processor 110 through the external memory interface 120, to implement a data storage function. For example, files such as pictures or videos are stored in the external storage card.

The electronic device 100 may implement an audio function, for example, music playing and recording, through the audio module 170, the speaker 170A, the receiver 170B, the microphone 170C, the headset jack 170D, the application processor, and the like.

The sensor module 180 may include a pressure sensor 180A, an acceleration sensor 180B, a touch sensor 180C, and the like.

The pressure sensor 180A is configured to sense a pressure signal, and can convert the pressure signal into an electrical signal. In some embodiments, the pressure sensor 180A may be disposed on the display 194.

The touch sensor 180C is also referred to as a "touch panel". The touch sensor 180C may be disposed on the display 194, and the touch sensor 180C and the display 194 form a touchscreen, which is also referred to as a "touch screen". The touch sensor 180C is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180C may alternatively be disposed on a surface of the electronic device 100 at a location different from that of the display 194.

The button 190 includes a power button, a volume button, and the like. The button 190 may be a mechanical button, or may be a touch button. The electronic device 100 may receive a key input, and generate a key signal input related to a user setting and function control of the electronic device 100. The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effect. Touch vibration feedback effect may be further customized. The indicator 192 may be an indicator, and may be configured to indicate a charging status and a power change, or may be configured to indicate a message, a missed call, a notification, and the like. The SIM card interface 195 is configured to be connected to a SIM card. The SIM card may be inserted into the SIM card interface 195 or removed from the SIM card interface 195, to implement contact with or separation from the electronic device 100.

It may be understood that the components shown in FIG. 23 do not constitute a specific limitation on the electronic device 100. The electronic device may further include more or fewer components than those shown in the figure, or some components may be combined, or some components may be split, or there may be a different component arrangement. In addition, a combination/connection relationship between the components in FIG. 23 may also be adjusted and modified.

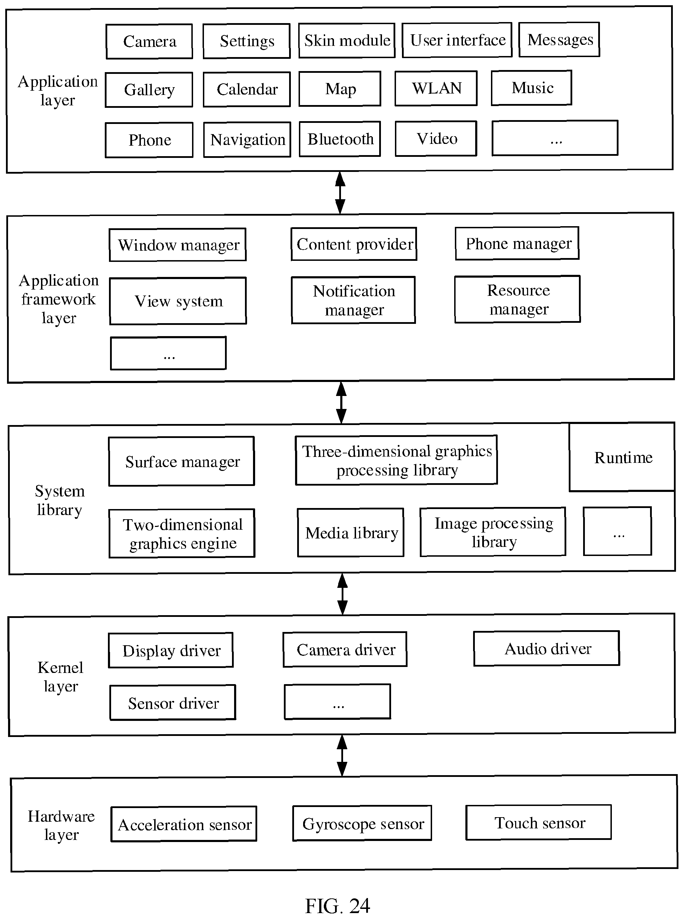

FIG. 24 is a block diagram of a software structure of an electronic device according to an embodiment of this application. As shown in FIG. 24, the software structure of the electronic device may be a layered architecture. For example, software may be divided into several layers, and each layer has a clear role and responsibility. The layers communicate with each other through a software interface. In some embodiments, an operating system is divided into four layers: an application layer, an application framework (framework, FWK) layer, a runtime (runtime) and system library, and a kernel layer from top to bottom.

The application layer may include a series of application packages (application packages). As shown in FIG. 24, the application layer may include Camera, Settings, a skin module, a user interface (user interface, UI), a third-party application, and the like. The third-party application may include Gallery, Calendar, Phone, Map, Navigation, WLAN, Bluetooth, Music, Video, Messages, and the like. In embodiments of this application, the application layer may include a target installation package that is of a target application and that the electronic device requests to download from a server, and a function file and a layout file in the target installation package are adapted to the electronic device.

The application framework layer provides an application programming interface (application programming interface, API) and a programming framework for an application at the application layer. The application framework layer may include some predefined functions. As shown in FIG. 24, the application framework layer may include a window manager, a content provider, a view system, a phone manager, a resource manager, and a notification manager.

The window manager is configured to manage a window program. The window manager may obtain a size of the display, determine whether there is a status bar, perform screen locking, take a screenshot, and the like. The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying a picture. The view system may be configured to construct an application. A display interface may include one or more views. For example, a display interface including an SMS message notification icon may include a text display view and a picture display view.

The phone manager is configured to provide a communication function of the electronic device, for example, management of a call status (including answering, hanging up, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, provide a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert sound is made, the electronic device vibrates, or the indicator blinks.

The runtime includes a core library and a virtual machine. The runtime is responsible for scheduling and management of the operating system.

The kernel library includes two parts: one part is a function that needs to be invoked in a Java language, and the other part is a kernel library of the operating system. The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), a two-dimensional graphics engine (for example, SGL), and an image processing library.

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The hardware layer may include various types of sensors, for example, an acceleration sensor, a gyroscope sensor, and a touch sensor.

It should be noted that the structures shown in FIG. 23 and FIG. 24 are merely examples of the electronic device provided in embodiments of this application, and cannot impose any limitation on the electronic device provided in embodiments of this application. During specific implementation, the electronic device may have more or fewer components or modules than those in the structures shown in FIG. 23 or FIG. 24.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. **In** this way, this application is intended to cover these modifications and variations of this application provided that they fall within the scope of protection defined by the following claims and their equivalent technologies.

## Claims

1. An electronic device, comprising: a first circuit board, a second circuit board, and a connector connecting the first circuit board and the second circuit board, wherein the first circuit board is built with a system on chip, the second circuit board is built with a radio frequency integrated circuit, a distance between any mobile cellular antenna in the electronic device and the radio frequency integrated circuit is less than a distance between any short-range antenna in the electronic device and the system on chip, and the system on chip on the first circuit board communicates with the radio frequency integrated circuit on the second circuit board through the connector;
the system on chip is configured to separately receive data from and send data to at least one short-range antenna and the radio frequency integrated circuit;
the at least one short-range antenna is further configured to receive and transmit data based on a short-range communication technology;
the radio frequency integrated circuit is further configured to: perform radio frequency processing on data sent by the system on chip, and then generate a radio frequency signal; receive a radio frequency signal from and send a radio frequency signal to at least one mobile cellular antenna; and perform radio frequency processing on a radio frequency signal sent by the at least one mobile cellular antenna to obtain corresponding data; and
the at least one mobile cellular antenna is further configured to receive and transmit a radio frequency signal based on a mobile cellular communication technology.

2. The electronic device according to claim 1, wherein the connector comprises a flexible connector, and the system on chip on the first circuit board communicates with the radio frequency integrated circuit on the second circuit board through the flexible connector.

3. The electronic device according to claim 2, wherein the second circuit board is further built with a signal processor, the signal processor is connected to the radio frequency integrated circuit, the signal processor is connected to the system on chip on the first circuit board through the flexible connector, and the signal processor is configured to:
receive first data from the system on chip, adjust or correct a first frequency loss of the first data in a transmission process, and send the first data to the radio frequency integrated circuit; and/or
receive second data from the radio frequency integrated circuit, adjust or correct a second frequency loss of the second data in a transmission process, and send the second data to the system on chip.

4. The electronic device according to claim 3, wherein the signal processor is any processor in a repeater, a phase-locked loop circuit, and a signal adjuster.

5. The electronic device according to claim 1, wherein the connector comprises a flexible connector and a coaxial cable, the coaxial cable comprises a plurality of coaxial lines, and the system on chip on the first circuit board communicates with the radio frequency integrated circuit on the second circuit board through the coaxial cable.

6. The electronic device according to claim 5, wherein the plurality of coaxial lines in the coaxial cable are in contact with each other to form a cylindrical shape, and a periphery of the plurality of coaxial lines is sequentially wrapped with a plastic packaging layer and a protective layer from inside to outside; or
the coaxial cable comprises the plurality of coaxial lines that are placed side by side, and a periphery of the plurality of coaxial lines is wrapped with the protective layer.

7. The electronic device according to any one of claims 1 to 6, wherein the first circuit board is further built with a power management unit, and the battery management unit on the first circuit board is connected to the system on chip on the first circuit board; and
when the connector comprises the flexible connector, the battery management unit on the first circuit board communicates with the radio frequency integrated circuit on the second circuit board through the flexible connector; or the connector further comprises a single coaxial line, and the battery management unit on the first circuit board communicates with the radio frequency integrated circuit on the second circuit board through the single coaxial line.

8. The electronic device according to claim 7, wherein the first circuit board is further built with a radio frequency integrated circuit, the radio frequency integrated circuit is connected to the battery management unit on the first circuit board, and the radio frequency integrated circuit is connected to the system on chip on the first circuit board.

9. The electronic device according to any one of claims 1 to 8, wherein the second circuit board is further built with an application processor and a display module, and the application processor is connected to the display module;
the application processor is configured to: communicate with the system on chip on the first circuit board through the flexible connector; and control an application in the electronic device, and send a first display command to the display module, wherein the first display command indicates the display module to display a user interface of the application; and
the display module is configured to: receive the first display command from the application processor, and display the user interface of the application based on the first display command.

10. The electronic device according to claim 9, wherein the second circuit board is further built with a digital video conditional receiving module and a power management unit, and both the digital video conditional receiving module and the power management unit are connected to the application processor;
the digital video conditional receiving module is configured to: receive a digital signal sent by an external signal source; determine to-be-displayed information based on the digital signal; and send the to-be-displayed information to the application processor;
the application processor is further configured to: receive the to-be-displayed information from the data video conditional receiving module, and send a second display command to the display module, wherein the second display command indicates the display module to display the to-be-displayed information;
the display module is further configured to: receive the second display command from the application processor, and display the to-be-displayed information based on the second display command; and
the power management unit is configured to supply power to the application processor.

11. The electronic device according to any one of claims 1 to 10, wherein the at least one short-range antenna comprises at least one wireless fidelity module, and a maximum quantity of the at least one wireless fidelity module is 8.

12. The electronic device according to any one of claims 1 to 11, wherein different mobile cellular antennas in the at least one mobile cellular antenna support different frequency bands.

13. The electronic device according to any one of claims 1 to 12, wherein the radio frequency integrated circuit is coupled to any one of the at least one mobile cellular antenna.

14. The electronic device according to any one of claims 1 to 13, wherein the at least one mobile cellular antenna is built on the second circuit board, and a proportion of an area occupied by the at least one mobile cellular antenna on the second circuit board is not greater than 50%.

15. The electronic device according to any one of claims 1 to 14, wherein the at least one short-range antenna is at any frame location on the first circuit board, and the at least one mobile cellular antenna is at any frame location on the second circuit board.

16. The electronic device according to any one of claims 1 to 15, wherein the electronic device comprises a first housing, and both the first circuit board and the second circuit board are built in the first housing.

17. The electronic device according to any one of claims 1 to 15, wherein the electronic device comprises a first housing and a second housing; and the first circuit board is built in the first housing, and the second circuit board is built in the second housing; or the first circuit board is built in the second housing, and the second circuit board is built in the first housing.

18. The electronic device according to claim 17, wherein when at least one third housing is further comprised between the first housing and the second housing of the electronic device, there are a plurality of flexible connectors.

19. The electronic device according to claim 17 or 18, wherein every two housings in the electronic device are hinged, or every two housings in the electronic device are slidably connected.
